Europäisches Patentamt

European Patent Office

Office européen des brevets

(19)

(11) **EP 0 650 644 B1**

# (12) FASCICULE DE BREVET EUROPEEN

(45) Date de publication et mention
de la délivrance du brevet:
**19.03.1997 Bulletin 1997/12**

(21) Numéro de dépôt: **93915591.7**

(22) Date de dépôt: **06.07.1993**

(51) Int Cl.⁶: **H02K 7/14**, B60K 7/00

(86) Numéro de dépôt international:
**PCT/CA93/00278**

**WO 94/01917 (20.01.1994 Gazette 1994/03)**

(54) **MOTEUR-ROUE ELECTRIQUE**

ELEKTROMOTOR/RAD-EINHEIT

ELECTRIC MOTOR-WHEEL

(84) Etats contractants désignés:
**AT BE CH DE DK ES FR GB GR IE IT LI LU MC NL PT SE**

(30) Priorité: **14.07.1992 US 913021**

(43) Date de publication de la demande:
**03.05.1995 Bulletin 1995/18**

(60) Demande divisionnaire: **96202199.4**

(73) Titulaire: **HYDRO-QUEBEC**
**Montréal, Québec H2Z 1A4 (CA)**

(72) Inventeurs:
  • COUTURE, Pierre
    **Boucherville, Québec J4B 4A4 (CA)**

  • FRANCOEUR, Bruno
    **Loretteville, Québec G2A 2S4 (CA)**
  • SIMARD, Julien
    **Brossard, Québec J4X 1C4 (CA)**
  • BOURGEOIS, François-Xavier
    **St-Liboire, Québec J0H 1R0 (CA)**
  • HARBEC, Germain
    **Ste-Julie, Québec J3E 1Y2 (CA)**

(74) Mandataire: **Thébault, Jean-Louis**
    **Cabinet Thébault S.A.**
    **1 Allées de Chartres**
    **33000 Bordeaux (FR)**

(56) Documents cités:
US-A- 2 506 146          US-A- 4 913 258
US-A- 4 918 365          US-A- 5 164 623

## Description

La présente invention concerne un moteur-roue électrique.

ART ANTÉRIEUR:

Dans le brevet américain No. 4,223,255 de Gary S. GOLDMAN, délivré le 16 septembre 1980, on décrit un moteur-roue muni d'un contrôleur et d'un circuit à double fonction sans balais apte à commuter ou à redresser, contenus entièrement dans la roue. Ce moteur-roue est prévu pour être utilisé principalement dans un véhicule électrique à quatre roues motrices. Ce moteur-roue est alimenté par des batteries via un circuit de conversion de puissance qui se trouve à l'extérieur du moteur-roue. Avec ce type de moteur-roue, si on veut obtenir un moteur pouvant produire un couple relativement élevé, les lignes d'alimentation entre le circuit de conversion de puissance et le moteur-roue doivent être de diamètre relativement grand pour pouvoir supporter des courants élevés. Des pertes d'énergie proportionnelles à la longueur des lignes d'alimentation seront alors produites.

Dans le brevet américain N° 1,997,974 de W.C. MOORE et al., délivré le 16 avril 1935, on décrit un moteur-roue électrique pour véhicule ayant une bride qui forme une surface interne de la roue, et un compartiment interne pour frein, localisé à l'intérieur d'une partie centrale de la bride. Toutefois on remarque, entre autres, que l'arbre central du moteur est décalé vers l'extérieur ce qui expose le moteur à des impacts externes.

Dans le brevet américain No. 4,913,258 de Hiroshi SAKURAI et al., délivré le 3 avril 1990, on décrit un moteur-roue ayant un rotor extérieur, comprenant une articulation, un moyeu enclenché de façon coaxiale avec l'articulation, un disque de roue fixé de façon rotative à la périphérie du moyeu, une roue fixée à la périphérie du disque de roue, un rotor monté sur un côté extérieur du disque de roue, et un stator monté de façon coaxiale par rapport au rotor et séparé de celui-ci par un petit entrefer, et monté sur le moyeu. Un des inconvénients avec ce moteur-roue ayant un rotor extérieur, résidé dans le fait qu'un fort courant doit être injecté dans le filage d'alimentation qui alimente le bobinage du noyau de l'armature pour obtenir un moteur-roue puissant ayant un couple élevé, et cela même si la vitesse est nulle. Avec ce type de moteur-roue à rotor externe, un convertisseur doit être fourni. Ce convertisseur est monté à l'intérieur du véhicule et peut s'avérer très encombrant. De tels courants élevés qui circulent dans les lignes d'alimentation produisent de la chaleur qui représente une perte d'énergie. De plus, les lignes d'alimentation peuvent s'avérer passablement lourdes.

Dans le brevet américain No. 754,802 de Ferdinand PORSCHE et al., délivré le 15 mars 1904, on décrit une combinaison qui comprend un essieu, une roue, le palier creux de la rôle, l'extrémité de l'axe qui se prolonge dans le pallier, et un raccord central entre l'axe et le pallier qui a sa projection axiale disposée carrément contre le plan de la roue. Encore une fois, pour obtenir un moteur-roue puissant, le courant fourni aux balais, qui provient de l'extérieur du moteur-roue doit être un courant élevé. Ce courant élevé doit être apporté au moyen de câbles ou conducteurs ayant de large diamètre pour réduire les pertes d'énergie.

Dans le brevet américain No. 2,348,053 de J.E. BOWKER, délivré le 2 mai 1944, on décrit des améliorations à un véhicule muni de moteurs électriques qui comprennent une pluralité de roues montées de façon à être entraînées, un dynamo-moteur formant une partie intégrante de chacune des roues, et des connexions de circuit électrique disposées entre des banques d'interrupteurs, des dynamo-moteurs et des accumulateurs pour contrôler le fonctionnement des dynamo-moteurs fonctionnant comme des moteurs selon la position d'un interrupteur de sélection. Encore une fois, les bobinages d'armature devront être alimentés avec un courant élevé de façon à obtenir un moteur puissant, de tels courants élevés nécessiteront des câbles de grand diamètre pour amener l'énergie des accumulateurs du véhicule jusqu'aux bobinages de l'armature. De tels câbles ou conducteurs de large diamètre sont rigides et encombrants.

Les brevets américains suivants décrivent différents moteurs-roues 638,643; 643,854; 2,506,146; 2,514,460; 2,581,551; 2,608,598; 3,566,165; 3,704,759; 3,792,742; 3,812,928; 3,892,300; 3,897,843; 4,021,690; 4,346,777; 4,389,586; 1,709,255; 2,335,398; et 3,548,965.

Aucun des brevets mentionnés ci-dessus ne montre les moyens nécessaires pour réduire le diamètre des câbles d'alimentation entre le moteur-roue et la source d'alimentation lorsqu'un moteur-roue puissant doit être réalisé.

Un des objectifs de la présente invention est de proposer un moteur-roue électrique dans lequel un courant alternatif variable est envoyé dans les bobinages du stator du moteur-roue, et dans lequel des conducteurs ou câbles de diamètre relativement petit, flexibles et moins encombrants peuvent être utilisés pour alimenter en énergie électrique le moteur-roue même dans le cas où un moteur-roue puissant est requis.

De plus, un des objectifs de la présente invention, est de proposer un moteur-roue dont le poids est réduit tout en demeurant compatible avec des systèmes de freinage standards.

Un des autres objectifs de la présente invention, obtenu par une réalisation préférentielle de la présente invention est de proposer un moteur-roue ayant un rapport $R_1/R_2$ qui est aussi près que possible de 1 où $R_1$ est la distance entre l'entrefer du moteur-roue et l'axe de rotation dudit moteur-roue, et $R_2$ est la distance entre la surface de la jante fixée sur le moteur-roue, qui est adaptée pour recevoir un pneu, et l'axe de rotation dudit moteur-roue.

De plus, un des objectifs de la présente invention est de proposer un moteur-roue qui dégage moins de chaleur et produit donc moins de perte d'énergie.

De plus, un des objectifs de la présente invention, obtenu par un mode de réalisations préférentielles, est de proposer un moteur-roue qui est muni de moyens pour refroidir ledit moteur-roue lorsque celui-ci est en opération.

De plus, un des objectifs de la présente invention, obtenu par un mode de réalisations préférentielles de celle-ci, est de proposer un moteur-roue qui est détachable d'un bras de suspension.

RESUME DE L'INVENTION

La présente invention vise un moteur-roue électrique comprenant un arbre creux ayant une extrémité munie d'une première ouverture, et une seconde extrémité munie d'une seconde ouverture, ladite première ouverture pouvant recevoir des conducteurs d'alimentation de l'extérieur dudit moteur-roue ; un stator coaxial avec ledit arbre et fixé audit arbre, ledit stator étant muni d'une partie creuse et de bobinages ; un rotor coaxial avec ledit stator et monté de façon à pouvoir tourner autour dudit stator ; et un moyen de conversion pour convertir une tension et un courant électrique d'entrée en une tension et un courant électrique de sortie, ledit courant de sortie étant alternatif et variable, ledit moyen de conversion comprenant une électronique de puissance ayant des bornes d'entrée pour recevoir ledit courant électrique d'entrée et des bornes de sortie pour générer ledit courant électrique alternatif et variable, par lequel, en opération, ledit courant alternatif et variable alimente lesdits bobinages dudit stator, ledit moteur-roue étant caractérisé en ce que :

ladite électronique de puissance est montée dans ladite partie creuse ; et
lesdits conducteurs d'alimentation sont branchés directement auxdites bornes d'entrée de ladite électronique de puissance qui se trouve dans ladite partie creuse de façon à ce que lesdits conducteurs qui sont reçus dans ladite première ouverture de l'arbre creux puissent être de diamètre relativement petit même dans un cas où ledit moteur doit générer un couple relativement élevé.

De préférence, ledit stator comprend une partie centrale fixée audit arbre, un support s'étendant de façon radiale à partir de ladite partie centrale, et une pièce polaire périphérique, circulaire et faite de lames de métal sur laquelle sont enroulés lesdits bobinages, ladite pièce polaire étant fixée à des extrémités périphériques dudit support, ledit support étant muni d'ouvertures pour réduire son poids.

De préférence, ledit rotor comprend un boîtier ayant une paroi cylindrique ayant une surface interne munie d'un moyen magnétique entourant ledit stator et séparé dudit stator par un entrefer.

Selon un premier mode préféré de réalisation, ledit rotor comprend un moyen magnétique muni d'une série d'aimants permanents.

Selon un deuxième mode préféré de réalisation, ledit rotor comprend un moyen magnétique ayant une pièce polaire faite de lames de métal sur laquelle un bobinage est enroulé, ledit stator est muni de balais qui sont reliés à une sortie dudit moyen de conversion, et ledit rotor est muni de surfaces de contact conductrices disposées de manière à coopérer avec lesdits balais, lesdites surfaces de contact étant reliées au bobinage dudit rotor.

Selon un troisième mode préféré de réalisation, ledit rotor comprend un moyen magnétique ayant une pièce polaire faite de lames de métal sur laquelle est enroulé un bobinage, ainsi un courant électrique peut être induit dans ledit bobinage dudit rotor au moyen d'un champ électromagnétique produit par un courant électrique injecté dans lesdits bobinages dudit stator.

Avantageusement, ledit stator comprend un matériau léger pouvant conduire la chaleur.

Selon les premier et troisième modes préférés de réalisation, ledit moyen de conversion comprend :

- un convertisseur courant continu/courant alternatif ayant une entrée pour recevoir un courant continu desdites bornes d'entrée, et trois sorties pour générer trois courants alternatifs de phase dans lesdites bornes de sortie ; et
- une unité de microprocesseur branchée audit convertisseur pour contrôler son opération.

Selon le deuxième mode préféré de réalisation, ledit moyen de conversion comprend :

- un convertisseur courant continu/courant alternatif ayant une entrée pour recevoir un courant continu desdites bornes d'entrée, et quatre sorties pour générer respectivement un courant continu destiné au bobinage dudit rotor, et trois courants alternatifs de phase destinés aux bobinages dudit stator ; et
- une unité de microprocesseur branchée audit convertisseur pour contrôler son opération.

De préférence, selon les premier et troisième modes préférés de réalisation :

- ledit stator est en forme de croix et a quatre bras ;
- ledit convertisseur est fait de trois unités de conversion qui génèrent respectivement lesdits trois courants alternatifs de phase, lesdites unités étant fixées respectivement sur trois desdits quatre bras ;
- ladite unité de microprocesseur est fixée sur le quatrième desdits bras ; et
- ledit moteur-roue comprenant en outre deux bus circulaires de distribution et d'alimentation branchés auxdites unités de conversion et au microprocesseur, ainsi, en opération, ledit courant continu est distribué auxdites unités de conversion et au microprocesseur au moyen desdits bus.

## BRÈVE DESCRIPTION DES DESSINS

La Figure 1 est une vue de côté partiellement en coupe d'un mode de réalisation du présent moteur-roue électrique, en combinaison avec une jante, un pneu et une bielle articulée;

La Figure 2 est une vue de face, partiellement en coupe du rotor et du stator du moteur roue électrique montrés à la Figure 1, incluant des détails de réalisation de la partie centrale;

La Figure 3 est une vue agrandie d'une partie de la Figure 1;

La Figure 4 est une vue en coupe selon la ligne 4-4 de la Figure 3;

La Figure 5 est une vue de face d'une partie du moteur-roue électrique montré à la Figure 1;

La Figure 6 est une vue agrandie d'une partie de la Figure 1;

La Figure 7 est une vue en coupe le long de la ligne 7-7 de la Figure 5;

La Figure 8 est une vue de face de la jante avec le pneu montrés à la figure 1;

La Figure 9 est une vue en coupe le long de la ligne 9-9 de la Figure 8;

La Figure 10 est une vue agrandie d'une partie de la Figure 9;

La Figure 11 est une vue agrandie d'une partie de la Figure 9;

La Figure 12 est une vue agrandie d'une partie de la Figure 1;

La Figure 13 est une vue de derrière des éléments qui sont montrés à la Figure 12;

La Figure 14 est une vue de derrière de la bielle articulée montrée à la Figure 1, partiellement en coupe;

La Figure 15 est une vue de derrière d'un élément de la Figure 1 sur lequel la bielle articulée est reliée;

La Figure 16 est une vue de dessus partiellement en coupe de la partie arrière du moteur-roue électrique montré à la Figure 1;

La Figure 17 est une vue de derrière de la bielle articulée en combinaison avec un frein à disque;

La Figure 18 est un diagramme bloc schématique d'un système de conversion électrique selon la présente invention;

La Figure 19 est une vue de côté partiellement en coupe d'un autre mode de réalisation du moteur-roue électrique selon la présente invention;

La Figure 20 est une vue de côté partiellement en coupe d'un autre mode de réalisation du moteur-roue électrique selon la présente invention;

La Figure 21 est un diagramme-bloc schématique d'un autre mode de réalisation du moyen de conversion électrique selon la présente invention;

La Figure 22 est une vue de côté partiellement en coupe d'un autre mode de réalisation du moteur-roue électrique selon la présente invention;

La Figure 23 est une vue de face partiellement en coupe du stator et du rotor du moteur-roue électrique montrés à la Figure 22;

La Figure 24 est une autre vue de côté, partiellement en coupe du mode de réalisation du moteur-roue électrique montré à la Figure 1; et

La Figure 25 est une vue agrandie d'une partie de la Figure 1.

## DESCRIPTION DÉTAILLÉE DES DESSINS

Dans les différentes figures des dessins, les éléments correspondants sont identifiés par les mêmes indices numériques.

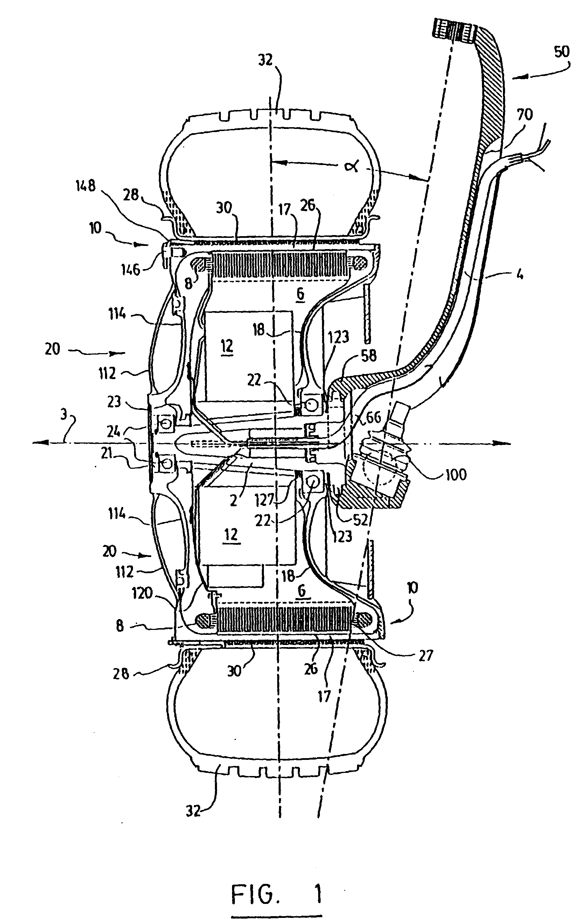

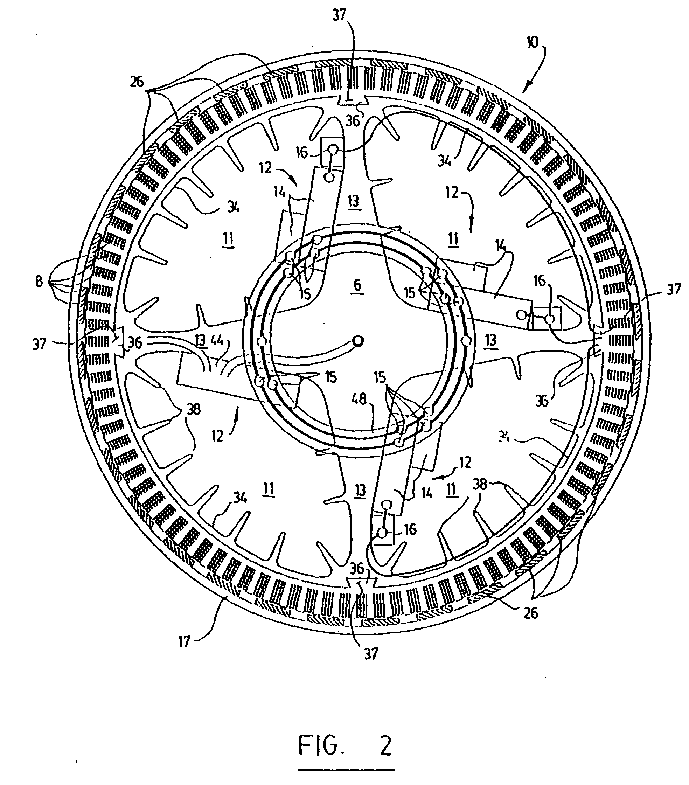

Si on se réfère maintenant aux Figures 1 et 2, on montre respectivement une vue de côté partiellement en coupe d'un mode de réalisation du moteur-roue électrique, en combinaison avec une jante 28, un pneu 32 et une bielle articulée 50; et une vue de face partiellement en coupe du rotor 10 et du stator 6 du moteur-roue électrique montré à la Figure 1. Le moteur-roue électrique comprend un arbre creux 2 ayant une première ouverture à une de ses extrémités et une seconde ouverture. La première ouverture reçoit des conducteurs 4 de l'extérieur du moteur-roue. Le stator 6 est coaxial avec l'arbre 2 et fixé à celui-ci, le stator 6 étant muni de parties creuses 11 et de bobinages 8.

Dans la Figure 2, seulement quelques sections de bobinage sont indiquées par le No. 8, mais on doit comprendre qu'il y a des bobinages tout autour du stator 6. Le stator 6 est fixé à l'arbre 2 mais peut être enlevé de celui-ci lorsque le moteur-roue n'est pas en opération.

Le rotor 10 est coaxial avec le stator 6 et est monté pour pouvoir tourner autour du stator 6. Le stator 6 comprend des ouvertures formant les parties creuses 11 entre les bras 13 pour réduire son poids. Le moteur-roue est aussi muni d'un système de conversion pour convertir un courant électrique d'entrée en un courant électrique alternatif et variable. Le système de conversion 12 comprend une unité de microprocesseur 44, un convertisseur courant continu/courant alternatif ayant une électronique de puissance 14, monté à l'intérieur des parties creuses 11, des bornes d'entrée 15 pour recevoir le courant électrique d'entrée amené au moyen de conducteurs 4 et des bornes de sortie 16 pour générer le courant électrique alternatif et variable. On doit comprendre que le système de conversion peut être réversible, de telle manière que le moteur électrique puisse être utilisé comme un générateur. La fréquence du courant électrique alternatif et variable est représentative d'une vitesse de rotation désirée du rotor 10, l'angle de phase du courant électrique alternatif et variable détermine si le moteur-roue fonctionnera comme un moteur ou comme un générateur et l'amplitude du courant alternatif et variable est représentative du couple désiré.

L'utilisateur du présent moteur roue peut utiliser des conducteurs de diamètre relativement petit pour amener une puissance électrique à l'intérieur du moteur-roue si une telle puissance est produite à partir d'un haut voltage parce que l'électronique de puissance 14 est à l'intérieur du moteur-roue. Une telle électronique de puissance 14 convertira le signal d'entrée à haut voltage et bas courant en un signal à courant élevé pour alimenter les bobinages 8 du stator en courant alternatif et variable. Etant donné que l'électronique de puissance 14 est déjà à l'intérieur du moteur-roue, des conducteurs de large diamètre requis pour amener le courant électrique du système de conversion 12 aux bobinages 8 du stator seront relativement courts. Bien sûr, l'électronique de puissance 14 comprend des condensateurs, des transistors, des diodes et autres composantes telles que connues par l'homme de l'art.

Pour réduire le poids ou le diamètre des conducteurs électriques, un voltage d'alimentation élevé peut être utilisé selon la relation suivante:

$$P = IV,$$

où P est la puissance, I est le courant et V est le voltage. Si V augmente, alors I est réduit. A basse vitesse, la puissance est basse, ceci implique que le courant qui alimente le convertisseur est également bas puisque le voltage est constant. Mais, si un couple élevé est requis, le courant qui alimente les bobinages du stator doit aussi être élevé. Le montage de l'électronique de puissance du convertisseur à l'intérieur du boîtier permet de choisir des conducteurs d'alimentation électriques par rapport à une puissance de moteur désirée tout en permettant un couple élevé à basse vitesse. De plus, le convertisseur permet d'adapter l'impédance du moteur par rapport à celle de la source d'alimentation en voltage élevé.

Le stator 6 comprend une partie centrale attachée à l'arbre 2, des bras 13 s'étendant radialement à partir de la partie centrale, et une pièce polaire circulaire et périphérique incluant des lames de métal 27 sur laquelle des bobinages 8 sont enroulés. La pièce polaire est fixée aux extrémités périphériques des bras 13.

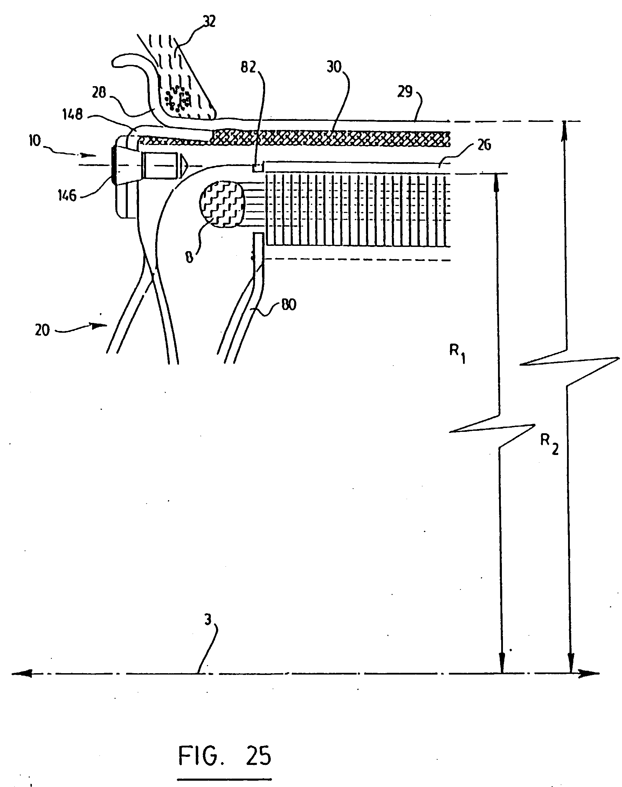

Le rotor 10 comprend un boîtier ayant une paroi cylindrique 17 ayant une surface interne munie d'un moyen magnétique 26 entourant le stator et séparé de celui-ci par un entrefer. Etant donné que l'entrefer est relativement petit, il ne peut pas être vu sur les figures 1 et 2 mais, sa localisation est indiquée sur la Figure 25 au moyen de $R_1$. Le boîtier comprend une paroi interne 18 disposée sur un côté de la paroi cylindrique 17, et une autre paroi 20 disposée sur l'autre côté de la paroi cylindrique 17. L'arbre 2 se prolonge à travers une partie centrale de la paroi interne 18. La seconde ouverture dudit arbre 2 est ouverte à l'intérieur dudit boîtier.

Le boîtier qui fait partie du rotor 10 enferme de façon étanche l'arbre 2, le stator 6 et le système de conversion 12. Un joint étanche 123 est prévu. Le moteur-roue comprend un premier roulement à bille 22 relié à la paroi interne 18, et un second roulement à bille 24 relié à la paroi externe 20. Les roulements à billes 22 et 24 sont respectivement montés de part et d'autre de l'arbre 2 de façon à ce que le rotor 10 puisse tourner par rapport au stator 6 au moyen des roulements à billes 22 et 24. Un boulon fileté 23 est prévu pour fixer le stator 6 par rapport à l'arbre 2. Un anneau d'arrêt 21 est également prévu. Un anneau de compression 127 est prévu pour fixer le roulement à billes 22.

Le stator 6 a besoin d'au moins deux bras disposés entre les ouvertures pour supporter la pièce polaire du stator 6. Aussi, le support peut comprendre trois bras également espacés, s'étendant radialement jusqu'aux extrémités périphériques du stator 6. Dans la Figure 2, on peut voir que le stator 6 comprend quatre bras 13 également espacés. Dans le mode de réalisation montré dans ces Figures 1 et 2, le moyen magnétique du rotor 6 comprend une série d'aimants permanents 26. Dans la Figure 2, seulement quelques aimants sont identifiés par le numéro 26, mais on doit comprendre que ces aimants 26 sont prévus tout autour du stator 6. Le stator 6 est fait en partie d'un matériau de poids léger pouvant conduire la chaleur. De préférence, ce matériau est un alliage d'aluminium. Le moteur-roue comprend en outre une jante 28 fixée autour d'une surface externe du boîtier, et une bande 30 faite d'un élastomère et montée entre la jante 28 et le boîtier. La jante 28 est adaptée pour recevoir le pneu 32. La jante 28 est à fond plat. Les aimants 26 sont faits de préférence de néodyme, de fer et de bore. La bande 30 empêche une pénétration d'eau ou de poussière entre le boîtier et la jante 28 pour éviter le débalancement de la roue.

Les extrémités périphériques des bras 13 sont fixés sur la pièce polaire du stator 6 au moyen d'un membre circulaire 34 qui fait partie intégrante des extrémités périphériques des bras 13. Le membre circulaire 34 a sa surface externe munie d'encoches 36. La pièce polaire du stator 6 a une surface interne munie de langues saillantes 37 de forme complémentaire qui sont aptes à coopérer avec les encoches 36 pour fixer la pièce polaire du stator 6 sur le membre circulaire 34. Le membre circulaire 34 a une surface interne munie de parties en saillies 38, ainsi un échange efficace de chaleur peut être obtenu au moyen des parties en saillies 38 lorsqu'une circulation d'air est produite à l'intérieur du boîtier. Seulement quelques parties en saillie sont indiquées par le numéro 38 de façon à ne pas surcharger la Figure 2. Le support du stator 6 et le membre circulaire 34 sont faits d'un alliage d'aluminium tandis que la pièce polaire du stator 6 est faite d'acier.

Il est à noter que les extrémités de la croix formée par les bras 13 du stator 6 sont alignées avec les encoches 36 pour des raisons mécaniques. Ainsi, les parties en saillie 38 qui sont disposées le long du membre circulaire 34 sont, par rapport à leur dimension longitudinale, de préférence déphasées par rapport à l'arbre du moteur-roue, le long de la direction circonférentielle du membre 34 de façon à le renforcer mécaniquement.

Si on se réfère maintenant aux Figures 1, 2 et 25, l'entrefer est positionné à une distance prédéterminée $R_1$ à partir de l'axe central 3 de l'arbre 2. La jante 28 a une surface 29 pour recevoir le pneu 32 qui est positionné à une distance prédéterminée $R_2$ de l'axe central 3 de l'arbre 2. $R_1/R_2$ doit être compris entre 0.65 et 0.91 pour obtenir un moteur-roue efficace. Plus haut est le ratio $R_1/R_2$, meilleure est l'efficacité du moteur-roue. Mais, comme il y a des limitations physiques, le moteur-roue montré dans les Figures 1, 2 et 25 a substantiellement un ratio $R_1/R_2$ de 0.91.

Pour un moteur avec un entrefer radial, le couple T est proportionnel à $L \cdot R_1^2 \cdot I_B$, où L est la largeur du pôle, $R_1$ est le rayon de l'entrefer et $I_B$ est le courant de bobinage. Pour la conception du présent moteur-roue, la largeur L de la pièce polaire a été maximisée. En ayant plusieurs pôles, le poids de la pièce polaire du circuit magnétique peut être réduit pour ainsi réduire le poids du rotor et le moment d'inertie du rotor, pour ainsi permettre la présence d'une cavité pour le montage d'un moyen de freinage. Le présent moteur-roue augmente le couple T en ayant une pièce polaire large et en ayant un ratio élevé de $R_1/R_2$ où la limite théorique qui ne peut pas être atteinte est 1. Le présent moteur-roue fournit également une puissance élevée parce que $P = T \cdot \omega$ qui est proportionnel à $L \cdot R_1^2 \cdot I \cdot \omega$, où $\omega$ est la fréquence angulaire du rotor. Le présent moteur-roue comprend un stator en forme de croix pour réduire le poids du moteur-roue, pour permettre un refroidissement des bobinages, et pour permettre un espace dans les parties creuses 11 qui fourniront un espace pour monter le système de conversion. Le stator en forme de croix supporte le système de conversion et est utilisé comme un élément de refroidissement.

Le moteur-roue a de préférence trente-deux pôles. Ce moteur-roue peut fonctionner avec seize pôles mais il est préférable d'avoir un nombre élevé de pôles pour réduire le poids du moteur-roue. Les conducteurs 4 sont de préférence faits d'un câble coaxial incluant une fibre optique. Ce câble coaxial prévient l'émission de radiations.

Dans la description qui va suivre, les mêmes numéros de référence se rapportent à des éléments semblables à travers le jeu de dessins.

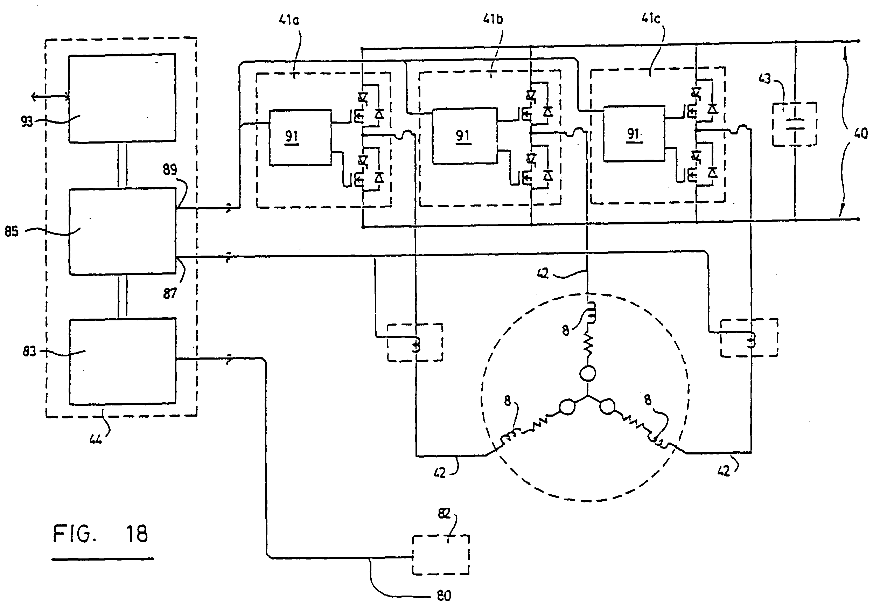

Si on se réfère maintenant aux Figures 1, 2 et 18, le système de conversion comprend un convertisseur courant continu/courant alternatif ayant une entrée 40 pour recevoir un courant continu des bornes d'entrée 15, et trois sorties 42 pour générer trois courants de phase alternatifs dans les bornes de sortie 16. Les courants alternatifs ne sont pas nécessairement trois courants de phase, des courants polyphasés peuvent également être utilisés. Le système de conversion comprend aussi une unité de microprocesseur 44 branchée aux bras 41a, 41b, 41c du convertisseur pour contrôler son opération. L'unité de microprocesseur peut être localisée à l'extérieur du moteur-roue. Le système de conversion montré à la Figure 18 peut être utilisé lorsque le rotor n'a pas à être alimenté avec un courant électrique. Comme on peut le voir à la Figure 2, le stator 6 est en forme de croix et a quatre bras 13. Le convertisseur comprend trois bras 41a, 41b et 41c qui génèrent respectivement les trois courants de phase alternatifs, les bras 41a, 41b et 41c étant fixés respectivement à trois des quatre bras 13 du stator 6. Ces trois bras 41a, 41b et 41c font partie de l'électronique de puissance 14 montrée à la Figure 2.

L'électronique de puissance montrée à la Figure 2 comprend les bras 41a, 41b, 41c du convertisseur montrés à la figure 18 mais comprend également le condensateur 43 montré à la Figure 18. Dans cette Figure 18, seulement un condensateur 43 est montré pour simplifier cette figure 18, mais dans le mode de réalisation montré à la Figure 2, le condensateur 43 est distribué en trois condensateurs disposés respectivement sur trois des quatre bras 13 montrés à la Figure 2. Il n'est pas essentiels que les amplificateurs de commande 91 soient à l'intérieur du boîtier. Chacun des bras 41a, 41b, 41c du convertisseur comprend une section de commutation et une section de commande qui est formée des amplificateurs de commande 91. L'unité de microprocesseur 44 est fixée sur le quatrième des bras 13. Il est à noter que l'unité de microprocesseur 44 peut également être montée à l'extérieur du moteur-roue parce qu'elle ne génère pas un courant élevé. Le moteur-roue comprend en outre deux bus de distribution et d'alimentation circulaires 48 branchés au bras 41a, 41b, 41c du convertisseur et à l'unité de microprocesseur 44, ainsi le courant continu amené par les conducteurs peut être distribué au bras 41a, 41b, 41c du convertisseur, et à l'unité de microprocesseur 44 au moyen du bus 48. Veuillez noter que le convertisseur peut être un convertisseur courant alternatif/courant alternatif où un courant électrique alternatif de haut voltage est amené par les conducteurs.

Si on se réfère maintenant aux Figures 1, 12, 13, 14 et 15, on peut voir que l'arbre 2 est muni d'un moyen de branchement à sa première extrémité par lequel le moteur-roue peut être branché à un membre de support. Ce membre de support est une bielle articulée 50. Ce moyen de branchement est fait d'un membre annulaire 52 ayant une bordure externe munie de façon régulière d'encoches 54 alternant avec des parties en saillies 56 de façon à ce que le membre annulaire 52 puisse être engagé et verrouillé avec une partie complémentaire 53 de la bielle articulée 50.

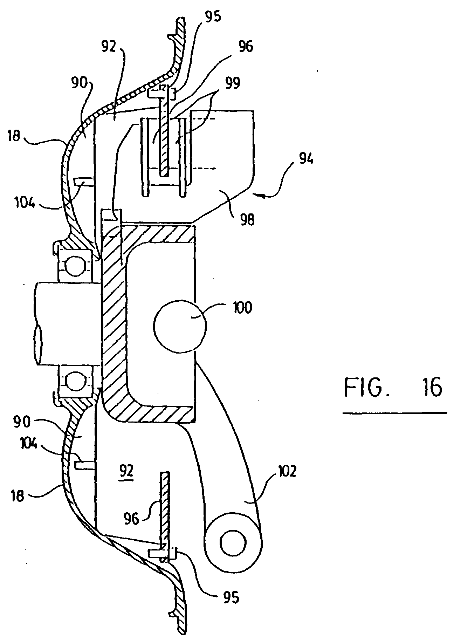

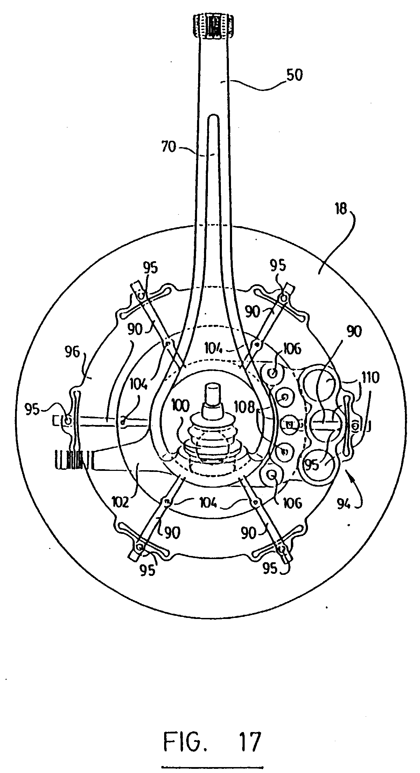

Les parties en saillie de la bordure externe ont une largeur qui varie dans la direction circonférentielle. La partie complémentaire de la bielle articulée 50 a également une section annulaire 58 ayant un diamètre suffisant pour que la section annulaire 58 puisse être glissée sur la bordure externe de l'arbre 2. La section annulaire 58 a des encoches 60 et des parties en saillie 62 de forme complémentaire qui sont adaptées pour coopérer avec des parties en saillie 56 et les encoches 54 correspondantes de la bordure externe du membre annulaire 52. Les parties en saillie 62 de la section annulaire 58 ont une largeur qui varie dans la direction circonférentielle de façon à ce que la section annulaire 58 puisse glisser sur la bordure externe et tourner par rapport à ladite bordure externe pour être coincée dans une position assemblée. Egalement, une clé 66 est prévue, elle a des langues 68 qui peuvent être insérées dans des cavités 55 qui sont produites lorsque la section annulaire 58 est tournée par rapport à la bordure externe de l'arbre 2 pour verrouiller l'arbre 2 par rapport à la bielle articulée 50. Des trous 63 sont prévus pour fixer un frein à disque (montré sur les Figures 16 et 17).

La bielle articulée 50 est munie d'une fente interne allongée 70 ayant une première extrémité adjacente à la section annulaire 58 et une seconde extrémité éloignée de ladite section annulaire 58, ainsi les conducteurs 4 peuvent être amenés à l'arbre 2 le long de ladite fente allongée 70. La clé 66 a une section allongée 72 munie d'une cavité interne allongée, la section allongée 72 étant apte à coopérer avec la fente interne 70 de la bielle 50 le long d'une partie de sa longueur pour protéger les conducteurs 4. La partie de la fente 70 qui n'est pas protégée par la section allongée 72, est munie d'un élément de protection (non montré) pour couvrir les conducteurs 4. Il est à noter que la bordure inférieure des langues 68 est légèrement en biais de façon à faciliter la pénétration et le verrouillage des langues 68 dans les cavités 55. Les trous 65 sont prévus pour fixer la clé 66 sur l'arbre 2. Les trous filetés 67 sont prévus pour faciliter l'enlèvement de la clé 66.

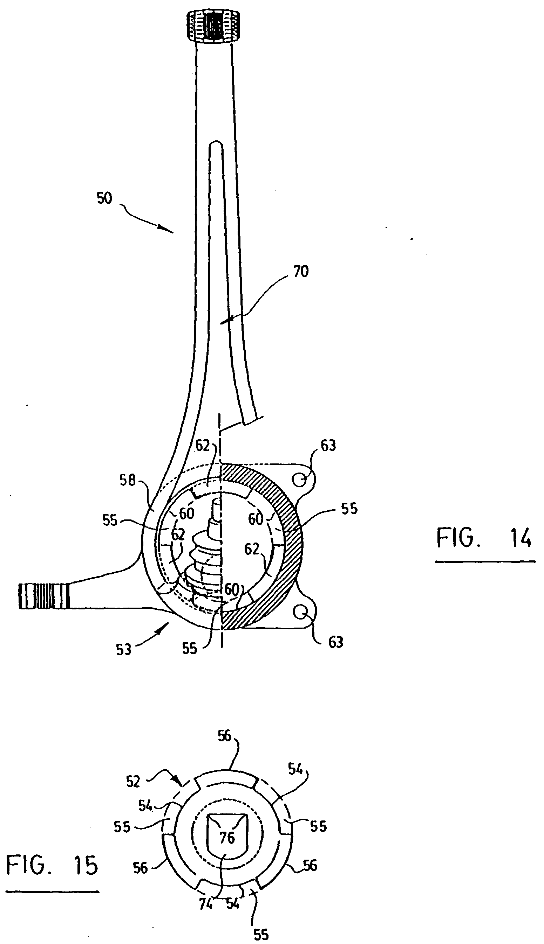

Si on se réfère maintenant plus spécifiquement à la Figure 15, la première extrémité de l'arbre a une partie interne munie d'une cavité 74 ayant des bordures tranchantes 76 prenant la forme de coins carrés de façon à ce que ladite cavité puisse recevoir une clé (non montrée sur les Figures) pour tourner l'arbre 2.

Si on se réfère maintenant plus spécifiquement aux Figures 1, 18 et 25, un moyen de mesure pour mesurer la vitesse de rotation et la position du rotor 10 par rapport au stator 6 est prévu, ce moyen comprend une fibre optique 80 ayant une première extrémité branchée à l'unité de microprocesseur 44, et une seconde extrémité positionnée pour être adjacente au rotor 10. Le moyen de mesure comprend également un réflecteur de lumière circulaire 82 monté sur le rotor 10 de telle manière que lorsque ledit rotor 10 tourne, le réflecteur passe devant la seconde extrémité de la fibre 80, ainsi la vitesse de rotation et la position du rotor 10 par rapport au stator 6 peuvent être calculées au moyen de l'unité de microprocesseur 44. Il est à noter que le réflecteur circulaire 82 est fait d'une série de réflecteurs ayant différentes caractéristiques de réflection de façon à ce que la position du rotor 10 par rapport au stator 6 puisse être déterminée en tout temps. La fibre optique 80 se compose d'au moins une fibre.

Si on se réfère maintenant plus spécifiquement à la Figure 18, la fibre 80 et le réflecteur 82 forment un encodeur qui est branché à un décodeur de position 83 de l'unité de microprocesseur 44. Le décodeur de position 83 comprend un coupleur optique, une source de lumière, un photo-détecteur et d'autres composantes électroniques. L'unité de microprocesseur 44 comprend également un contrôleur 85 ayant une entrée 87 pour détecter les courants dans les bobinages 8 du stator et une sortie 89 pour déclencher les bras 41a, 41b, 41c du convertisseur au moyen des amplificateurs de commande 91. L'unité de microprocesseur 44 est également munie d'une interface de communication 93 pour la relier à un autre dispositif intelligent. Il n'est pas nécessaire que les amplificateurs de commande 91 soient à l'intérieur du boîtier.

Si on se réfère maintenant aux Figures 1, 16 et 17, on peut voir que la paroi interne 18 du boîtier a une surface externe de forme concave pour produire, lorsque le rotor 10 tourne, une circulation d'air vers la périphérie de la paroi interne 18. La surface externe est munie d'une série de lames allongées et parallèles 90 s'étendant dans la direction de l'arbre 2. Les lames ont leurs extrémités libres qui définissent un espace 92 dans lequel une partie d'un moyen de freinage 94 peut être montée, ainsi un échange efficace de chaleur peut être obtenu à travers la paroi interne 18 et le moyen de freinage 94 peut être refroidi par la circulation d'air produite le long de la paroi interne 18.

Si on se réfère maintenant plus spécifiquement aux Figures 16 et 17, on peut voir que le moyen de freinage 94 est un frein à disque ayant un disque 96 boulonné sur la paroi interne 18. Comme il est connu dans l'art, ce disque de freinage comprend un étrier 98 apte à coopérer avec le disque 96. Montré d'une façon schématique, on peut voir le joint d'articulation à rotule 100 et le bras de direction 102 du système de direction. Chacune des lames 90 est munie de cavités filetés 104 servant à monter un frein à tambour à la place du frein à disque 94. Des boulons 95 sont prévus pour fixer le frein à disque sur la paroi interne 18.

On peut voir des attaches 106 pour fixer le frein à disque 94 sur la bielle 50. On peut voir également des boulons 108 pour supporter l'étrier, et des pistons 110 aptes à coopérer avec des coussinets 99. A partir des Figures 1, 16 et 17 on peut voir que le joint d'articulation à rotule du système de direction est passablement près de l'arbre 2 de façon à ce que l'angle alpha entre l'axe de rotation du moteur-roue et l'axe déterminé par la bielle 50 et le joint d'articulation à rotule 100 soit avantageux. Il est à noter que la géométrie de la paroi interne 18 permet cette position avantageuse du joint d'articulation à rotule 100 par rapport au moteur-roue.

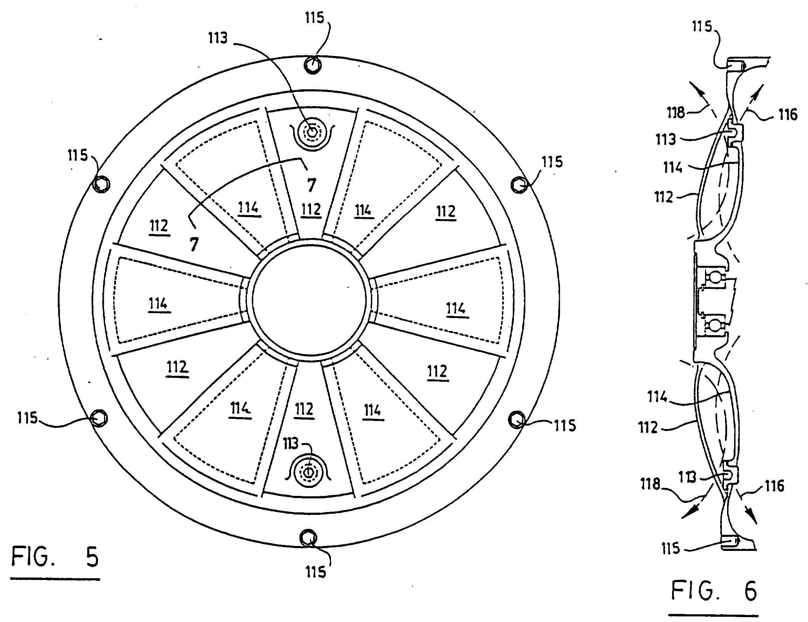

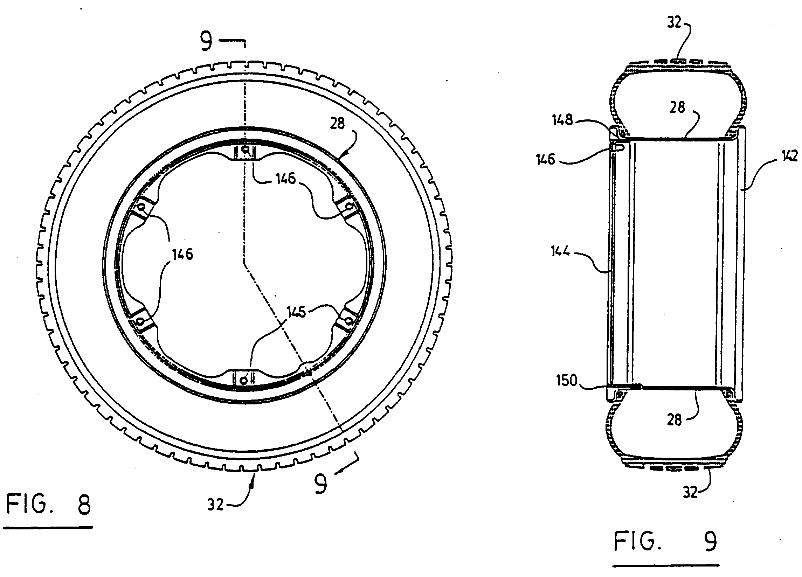

Si on se réfère maintenant aux Figures 1, 5, 6 et 7, la paroi externe du boîtier comprend des sections convexes et concaves 112 et 114 qui alternent le long de sa direction circonférentielle, de telle manière que, lorsque le rotor tourne, une circulation d'air est produite à l'intérieur du boîtier au moyen de la section convexe 112 tel qu'indiqué par les flèches 116, et une circulation d'air est produite le long des parties externes de la section concave 114 tel qu'indiqué par les flèches 118, ainsi un échange efficace de chaleur peut être obtenu à travers la paroi externe. Il est à noter que la Figure 6 est une vue de côté partiellement en coupe de la Figure 5. Des ouvertures avec bouchon 113 sont prévues pour permettre un accès à l'intérieur du boîtier. Des boulons 115 sont prévus pour fixer la jante 28.

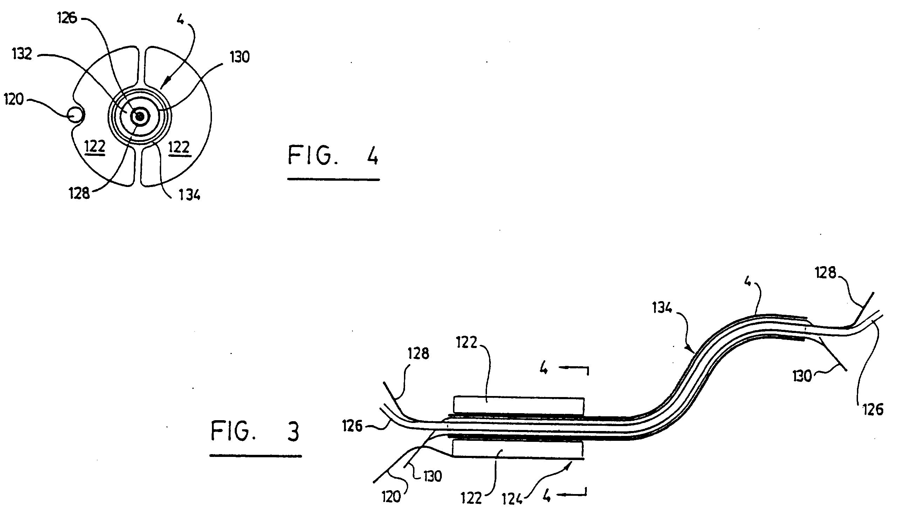

Si on se réfère maintenant aux Figures 1, 3 et 4, le moteur-roue comprend en outre un moyen pour assécher incluant un tuyau à air 120 ayant une extrémité disposée à l'intérieur du boîtier, une chambre 122 disposée à l'extrémité externe du tuyau 120 et un matériau de dessiccation (non montré) disposé à l'intérieur de la chambre 122, ainsi lorsque le rotor 10 tourne, une circulation d'air est produite à l'intérieur du tuyau 120 et à travers la chambre 122 pour assécher l'air à l'intérieur du boîtier. La chambre 122 est annulaire, allongée et disposée à l'intérieur de l'arbre creux 2. La chambre 122 est ouverte à chacune de ses extrémités. L'ouverture de l'arbre qui est adjacente à la bielle articulée 150 est étanche à l'air. On peut voir sur la Figure 1 qu'une extrémité du tuyau 120 est adjacente à la partie périphérique du stator 6, le tuyau 120 est monté entre la paroi externe 20 et le stator 6 jusqu'à ce qu'il atteigne l'ouverture de l'arbre 2, alors il est disposé le long de la chambre 122 de telle manière que son autre extrémité 124 soit placée à une extrémité de la chambre tel que montré aux Figures 3 et 4. L'extrémité 124 du tuyau 120 est disposée entre l'extrémité étanche à l'air de l'arbre creux et la chambre 122 de façon à ce que l'air circulant à travers le tuyau 120 doive aller à travers la chambre où il est asséché.

Les conducteurs 4 ont dans leur partie centrale une fibre optique 126, un premier conducteur électrique 128 et un second conducteur électrique 130 séparé du premier conducteur par un matériau isolant 132. Les conducteurs 4 sont protégés par une gaine externe 134.

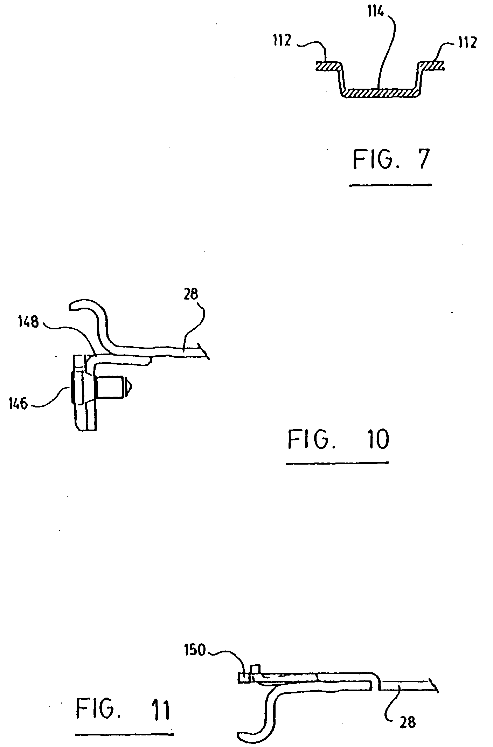

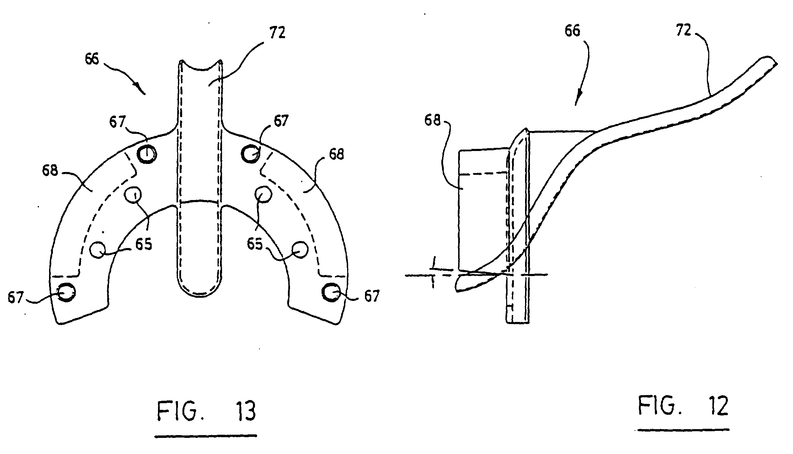

Si on se réfère maintenant aux Figures 8, 9, 10 et 11, on peut voir un pneu 32 qui est fixé à la jante 28 d'une manière permanente lors de l'assemblage du moteur-roue. Le moteur-roue est muni d'une jante à fond plat 28, d'une première bride de côté 142 qui peut être soudée sur la jante 28, et d'une seconde bride de côté 144, qui est fixée sur la jante 28 au moyen de boulons 146 et d'un membre en forme de L 148 soudé sur la jante 28. La relation entre la jante 28, un des boulons 146 et le membre en forme de L 148, peut être vue plus facilement à la Figure 10. Le pneu 32 peut être gonflé au moyen d'une valve 150 qui permet un accès à l'intérieur du pneu 32. Cette valve 150 peut être vue de façon plus détaillée à la Figure 11.

Etant donné que la jante 28 est à fond plat, le pneu 32 ne peut pas être enlevé de la jante 28. Avec un tel moteur-roue, lorsque le pneu est usé, la jante 28 et le pneu doivent être remplacés.

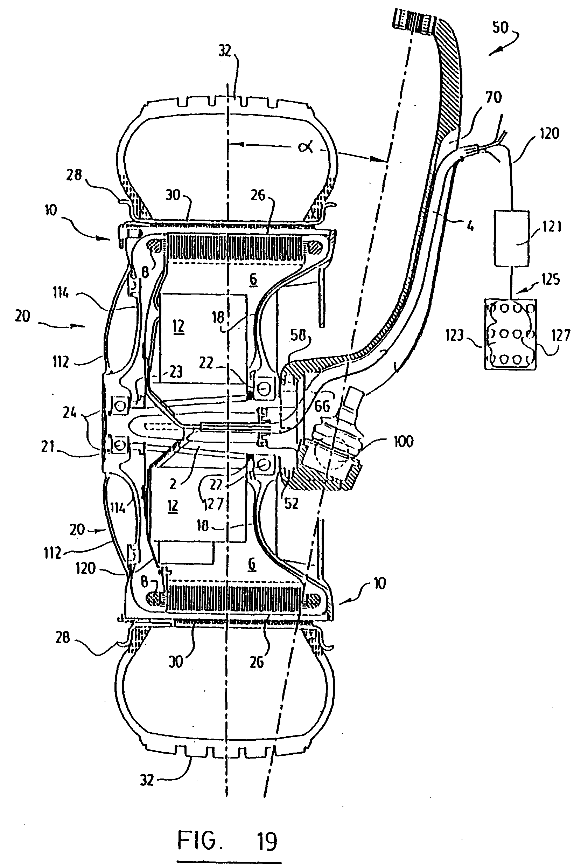

Si on se réfère maintenant à la Figure 19, on peut voir un moteur-roue semblable à celui montré à la Figure 1, dans lequel le moyen pour assécher est différent. Ce moyen pour assécher comprend un tuyau à air 120 ayant une extrémité disposée à l'intérieur du boîtier, et une chambre 121 munie d'un ballon gonflable 123 monté dans un boîtier 127, disposé à l'autre extrémité 125 du tuyau 120. Un matériau de dessiccation est disposé à l'intérieur de la chambre 121, ainsi, lorsque la température ou la pression atmosphérique changent, une circulation d'air est produite à l'intérieur du tuyau 120 et à travers la chambre 121 pour assécher l'intérieur du boîtier. Comme on peut le voir, la chambre 121 est disposée à l'extérieur du moteur-roue. L'ouverture de l'arbre 2 qui est adjacent à la bielle articulée 50 est étanche à l'air. Le tuyau 120 est utilisé comme une sortie et comme une entrée pour la chambre 121.

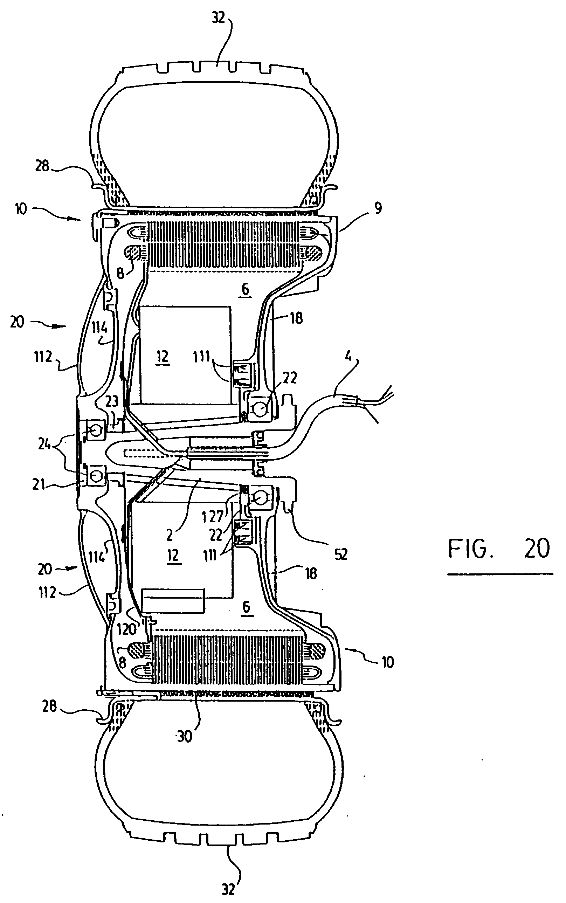

Si on se réfère maintenant à la Figure 20, on peut voir un moteur-roue électrique dans lequel le rotor comprend un moyen magnétique incluant une pièce polaire fait de lames de métal sur laquelle est enroulée un bobinage 9, le stator est muni de balais 111 qui sont reliés à une sortie du système de conversion 12. Le rotor est muni d'une surface de contact conductrice disposée de façon à pouvoir coopérer avec les balais 111. La surface de contact est branchée au bobinage 9 du rotor 10.

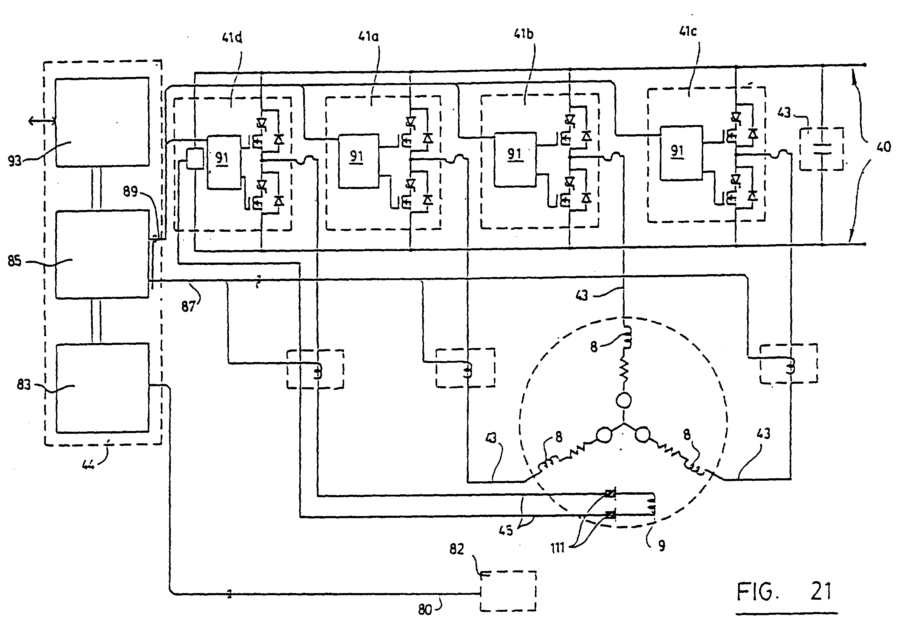

Si on se réfère maintenant plus spécifiquement aux Figures 20 et 21, le système de conversion 12 comprend un convertisseur courant continu/courant alternatif ayant quatre bras 41a, 41b, 41c et 41d, une entrée pour recevoir un courant continu à partir des bornes d'entrée 40 et quatre sorties 45 et 43 pour générer un courant continu pour le bobinage 9 du rotor 10 et trois courants de phase alternatifs pour les bobinages 8 du stator 6. Le système de conversion comprend également une unité de microprocesseur 44 branchée aux bras 41a, 41b, 41c et 41d, pour contrôler son opération. Le bobinage 9 et les lames du rotor 10 sur lesquelles le bobinage 9 est enroulé peuvent être remplacés par un anneau conducteur.

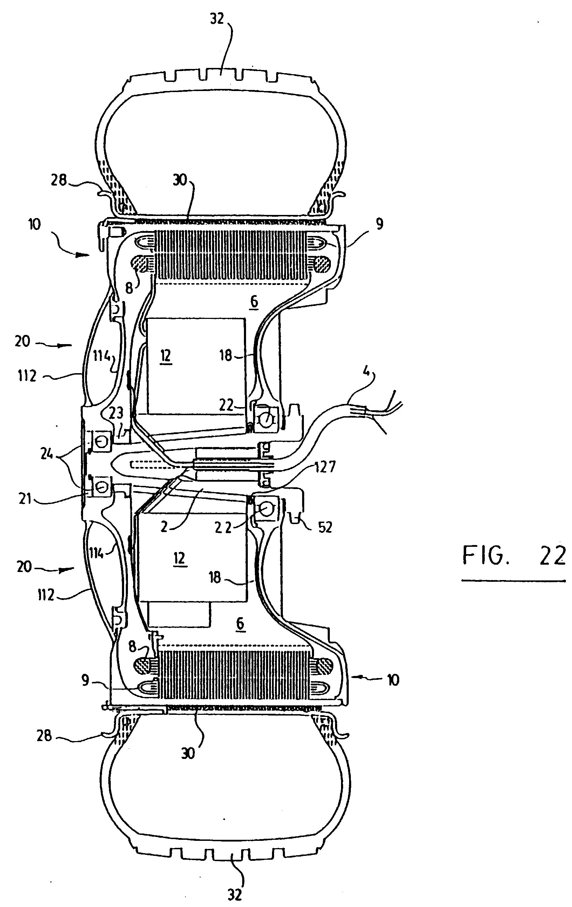

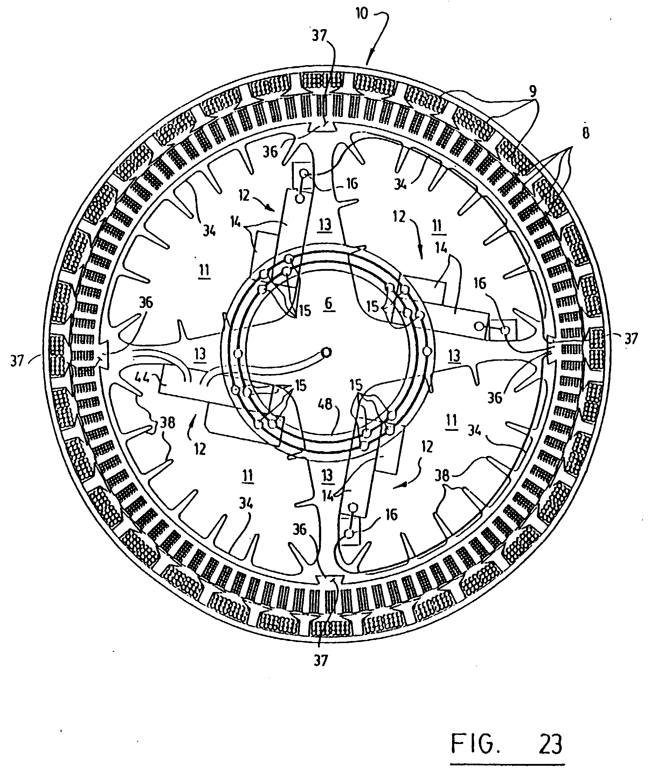

Si on se réfère maintenant aux Figures 22 et 23, on peut voir un moteur-roue comportant un rotor à induction. Le rotor comprend un moyen magnétique incluant une pièce polaire faite de lames de métal sur laquelle le bobinage 9 est enroulé, ainsi un courant électrique peut être induit dans le bobinage 9 du rotor au moyen d'un champ électromagnétique produit par le courant électrique injecté dans les bobinages 8 du stator 6.

Le numéro de référence 8 dans la Figure 23, représente tous les bobinages qui sont disposés autour du stator même si seulement une partie des bobinages est indiquée. Egalement, le numéro de référence 9, dans la Figure 23, représente le bobinage qui est disposé tout autour du rotor. Le système de conversion 12 comprend un convertisseur courant continu/courant alternatif ayant trois bras 41a, 41b, 41c, une entrée pour recevoir un courant continu à partir des bornes d'entrée 15 qui sont branchées au bus 48 et trois sorties qui génèrent trois courants de phase alternatifs dans les bornes de sortie 16. Egalement, le système de conversion 12 comprend une unité de microprocesseur 44 branchée au convertisseur pour contrôler son opération.

Comme on peut le voir à la Figure 23, le stator est en forme de croix et a quatre bras 13. Le convertisseur comprend une électronique de puissance qui est faite en partie des trois bras du convertisseur qui génèrent respectivement les trois courants de phase alternatifs. Les bras de convertisseur sont fixés respectivement sur trois des quatre bras 13. Le moteur-roue comprend en outre deux bus d'alimentation et de distribution circulaires branchés à l'électronique de puissance 14 et à l'unité de microprocesseur 44.

L'entrefer est positionné à une distance prédéterminée $R_1$ de l'axe central 3 de l'arbre 2. La jante 28 a une surface pour recevoir le pneu 32 qui est positionné à une distance prédéterminée $R_2$ de l'axe central 3 de l'arbre 2. Le ratio $R_1/R_2$ est de l'ordre de 0.65 à 0.80 dans le cas où le rotor est muni d'un bobinage. Plus haut est le ratio, meilleure est l'efficacité du moteur-roue. Dans le cas montré aux Figures 22 et 23, le ratio est de l'ordre de 0.80.

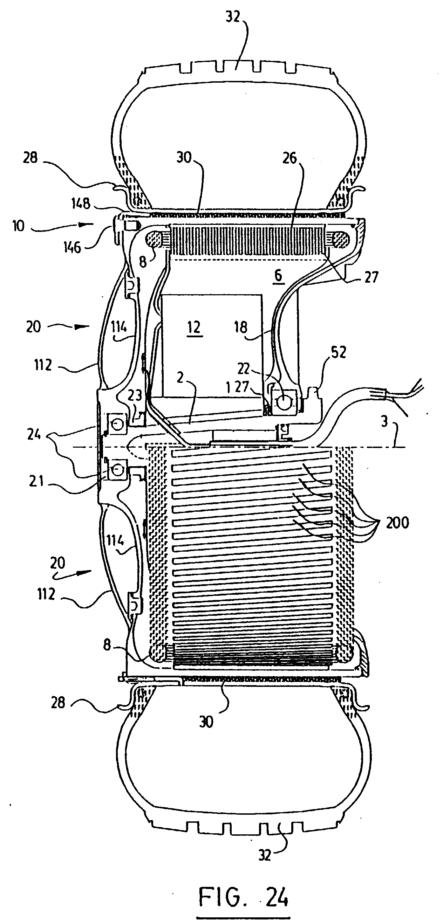

Si on se réfère maintenant à la Figure 24, on peut voir que le stator 6 est cylindrique et muni de fentes longitudinales et parallèles 200 pour recevoir les bobinages 8 du stator 6. De façon à ne pas surcharger la Figure 24, seulement quelques fentes ont été identifiées par le numéro 200. Les fentes sont courbées par rapport à l'axe longitudinal 3 de l'arbre 2 de façon à ce que chacune des fentes 200 ait son extrémité inférieure qui soit alignée avec l'extrémité supérieure de la fente adjacente de façon à produire un couple régulier lorsque le moteur-roue est en opération

## Revendications

1. Moteur-roue électrique comprenant un arbre creux (2) ayant une extrémité munie d'une première ouverture, et une seconde extrémité munie d'une seconde ouverture, ladite première ouverture pouvant recevoir des conducteurs (4) d'alimentation de l'extérieur dudit moteur-roue; un stator (6) coaxial avec ledit arbre (2) et fixé audit arbre (2), ledit stator (6) étant muni d'une partie creuse (11) et de bobinages (8); un rotor (10) coaxial avec ledit stator (6) et monté de façon à pouvoir tourner autour dudit stator (6); et un moyen de conversion (12) pour convertir une tension et un courant électrique d'entrée en une tension et un courant électrique de sortie, ledit courant de sortie étant alternatif et variable, ledit moyen de conversion (12) comprenant une électronique de puissance (14) ayant des bornes d'entrée (15) pour recevoir ledit courant électrique d'entrée et des bornes de sortie (16) pour générer ledit courant électrique alternatif et variable, par lequel, en opération, ledit courant alternatif et variable alimente lesdits bobinages (8) dudit stator (6), ledit moteur-roue étant caractérisé en ce que:

ladite électronique de puissance (14) est montée dans ladite partie creuse (11); et

lesdits conducteurs (4) d'alimentation sont branchés directement auxdites bornes d'entrée de ladite électronique de puissance (14) qui se trouvé dans ladite partie creuse (11) de façon ce que lesdits conducteurs (4) qui sont reçus dans ladite première ouverture de l'arbre creux puissent être de diamètre relativement petit même dans un cas où ledit moteur doit générer un couple relativement élevé.

2. Moteur-roue selon la revendication 1, dans lequel ledit stator (6) comprend une partie centrale fixée audit arbre (2), un support (13) s'étendant de façon radiale à partir de ladite partie centrale, et une pièce polaire périphérique, circulaire et faite de lames de métal (27) sur laquelle sont enroulés lesdits bobinages (8), ladite pièce polaire étant fixée à des extrémités périphériques dudit support (13), ledit support (13) étant muni d'ouvertures pour réduire son poids.

3. Moteur-roue selon la revendication 1, dans lequel ledit rotor (10) comprend un boîtier ayant une paroi cylindrique (17) ayant une surface interne munie d'un moyen magnétique entourant ledit stator (6) et séparé dudit stator (6) par un entrefer.

4. Moteur-roue selon la revendication 3, dans lequel ledit boîtier comprend une paroi interne (18) disposée sur un côté de ladite paroi cylindrique (17), et une paroi externe (20) disposée sur l'autre côté de ladite paroi cylindrique (17), ledit arbre (2) se prolongeant à travers une partie centrale de ladite paroi interne (18).

5. Moteur-roue selon la revendication 4, dans lequel ledit boîtier enferme de façon étanche ledit arbre (2), ledit stator (6) et ledit moyen de conversion (12).

6. Moteur-roue selon la revendication 4, comprenant un premier roulement à billes (22) relié à ladite paroi interne (18), et un second roulement à billes (24) relié à ladite paroi externe (20), lesdits roulements à billes (22, 24) étant montés respectivement de chaque côté dudit arbre (2) de façon à ce que le rotor (10) puisse tourner par rapport audit stator (6) au moyen des roulements à billes (22, 24).

7. Moteur-roue selon la revendication 2, dans lequel ledit support (13) comprend au moins deux bras (13) entre lesdites ouvertures.

8. Moteur-roue selon la revendication 7, dans lequel ledit support (13) comprend au moins trois bras (13) également espacés s'étendant de façon radiale jusqu'aux extrémités périphériques dudit support (13).

9. Moteur-roue selon la revendication 8, dans lequel lesdits bras (13) également espacés comprennent quatre bras (13) également espacés.

10. Moteur-roue selon la revendication 1, dans lequel ledit rotor (10) comprend un moyen magnétique muni d'une série d'aimants permanents (26).

11. Moteur-roue selon la revendication 1, dans lequel ledit rotor (10) comprend un moyen magnétique ayant une pièce polaire fait de lames de métal sur laquelle un bobinage (9) est enroulé, ledit stator (6) est muni de balais (111) qui sont reliés à une sortie dudit moyen de conversion (12), et ledit rotor (10) est muni de surfaces de contact conductrices disposées de manière à coopérer avec lesdits balais (111), lesdites surfaces de contact étant reliées au bobinage (9) dudit rotor (10).

12. Moteur-roue selon la revendication 1, dans lequel ledit rotor (10) comprend un moyen magnétique ayant une pièce polaire faite de lames de métal sur laquelle est enroulé un bobinaqe (9), ainsi un courant électrique peut être induit dans ledit bobinage (9) dudit rotor (10) au moyen d'un champ électromagnétique produit par un courant électrique injecté dans lesdits bobinages (8) dudit stator (6).

13. Moteur-roue selon la revendication 1, dans lequel ledit stator (6) comprend un matériau léger pouvant conduire la chaleur.

14. Moteur-roue selon la revendication 13, dans lequel ledit matériau est un alliage d'aluminium.

15. Moteur-roue selon la revendication 3, comprenant en outre une jante (28) fixée autour d'une surface externe dudit boîtier, et une bande (30) faite d'un élastomère, ladite bande (30) étant montée entre ladite jante (28) et ledit boîtier, ladite jante (28) étant adaptée pour recevoir un pneu (32).

16. Moteur-roue selon la revendication 15, dans lequel ladite jante (28) est plate.

17. Moteur-roue selon la revendication 10, dans lequel ledit moyen de conversion (12) comprend:

- un convertisseur courant continu/courant alternatif (41a, 41b, 41c) ayant une entrée (40) pour recevoir un courant continu desdites bornes d'entrée (15), et trois sorties (42) pour générer trois courants alternatifs de phase dans lesdites bornes de sortie (16); et
- une unité de microprocesseur (44) branchée audit convertisseur (41a, 41b, 41c) pour contrôler son opération.

18. Moteur-roue selon la revendication 12, dans lequel ledit moyen de conversion (12) comprend:

- un convertisseur courant continu/courant alternatif (41a, 41b, 41c) ayant une entrée (40) pour recevoir un courant continu à partir desdites bornes d'entrée (15), et trois sorties (42) pour générer trois courants alternatifs de phase dans lesdites bornes de sortie (16); et
- une unité de microprocesseur (44) tranchée audit convertisseur (41a, 41b, 41c) pour contrôler son opération.

19. Moteur-roue selon la revendication 17, dans lequel:

- ledit stator (6) est en forme de croix et a quatre bras (13);
- ledit convertisseur (41a, 41b, 41c) est fait de trois unités de conversion (41a, 41b, 41c) qui génèrent respectivement lesdits trois courants alternatifs de phase, lesdites unités (41a, 41b, 41c) étant fixées respectivement sur trois desdits quatre bras (13); et
- ladite unité de microprocesseur (44) est fixée sur le quatrième desdits bras (13);

ledit moteur-roue comprenant en outre deux bus circulaires de distribution et d'alimentation (48) branchés auxdites unités de conversion (41a, 41b, 41c) et au microprocesseur (44), ainsi, en opération, ledit courant continu est distribué auxdites unités de conversion (41a, 41b, 41c) et au microprocesseur (44) au moyen desdits bus (48).

20. Moteur-roue selon la revendication 18, dans lequel:

- ledit stator (6) est en forme de croix et a quatre bras (13);
- ledit convertisseur (41a, 41b, 41c) est fait de trois unités de conversion (41a, 41b, 41c) qui génèrent respectivement lesdits trois courants alternatifs de phase, lesdites unités (41a, 41b, 41c) étant fixées respectivement sur trois desdits quatre bras (13); et
- ladite unité de microprocesseur (44) est fixée sur le quatrième desdits bras (13);

ledit moteur-roue comprenant en outre deux bus circulaires de distribution et d'alimentation (48) branchés auxdites unités de conversion (41a, 41b, 41c) et au microprocesseur (44), ainsi, en opération, ledit courant continu est distribué auxdites unités de conversion (41a, 41b, 41c) et au microprocesseur (44) au moyen desdits bus (48).

21. Moteur-roue selon la revendication 11, dans lequel ledit moyen de conversion (12) comprend:

- un convertisseur courant continu/courant alternatif (41a, 41b, 41c, 41d) ayant une entrée (40) pour recevoir un courant continu desdites bornes d'entrée (15), et quatre sorties (43, 45) pour générer respectivement un courant continu destiné au bobinage (9) dudit rotor (10), et trois courants alternatifs de phase destinés aux bobinages (8) dudit stator (6); et

- une unité de microprocesseur (44) branchée audit convertisseur (41a, 41b, 41c, 41d) pour contrôler son opération.

**22.** Moteur-roue selon la revendication 21, dans lequel ledit convertisseur (41a, 41b, 41c, 41d) comprend une première unité de conversion (41d) qui génère ledit voltage continu servant à alimenter ledit bobinage (9) dudit rotor (10), et trois unités de conversion (41a, 41b, 41c) qui génèrent respectivement lesdits trois courants alternatifs de phase.

**23.** Moteur-roue selon la revendication 4, dans lequel ladite paroi externe (20) dudit boîtier comprend des sections convexes et concaves (112, 114) qui sont disposées en alternance le long d'une direction circonférentielle de ladite paroi externe (20), de telle manière que lorsque ledit rotor (10) tourne, une circulation d'air est produite à l'intérieur dudit boîtier par lesdites sections convexes (112) et une circulation d'air est produite le long des parties externes desdites sections concaves (114) de façon à permettre un échange de chaleur efficace à travers ladite paroi externe (20).

**24.** Moteur-roue selon la revendication 2, dans lequel lesdites extrémités périphériques dudit support (13) sont fixées sur ladite pièce polaire dudit stator (6) au moyen d'un membre circulaire (34) qui est solidaire avec lesdites extrémités périphériques, ledit membre circulaire (34) a une surface externe munie d'encoches (36), ladite pièce polaire dudit stator (6) a une surface interne munie de langues saillantes (37) aptes à coopérer avec lesdites encoches (36) pour fixer ladite pièce polaire dudit stator (6) sur ledit membre circulaire (34), ledit membre circulaire (34) ayant une surface interne munie de parties en saillie (38), un échange efficace de chaleur pouvant ainsi être obtenu au moyen desdites parties en saillie (38) lorsqu'une circulation d'air est produite à l'intérieur dudit boîtier.

**25.** Moteur-roue selon la revendication 1, comprenant en outre un moyen de mesure pour mesurer une vitesse de rotation et une position dudit rotor (10) par rapport audit stator (6), ledit moyen de mesure comprenant:

- une fibre optique (80) ayant une extrémité branchée à une unité de microprocesseur (44), et une seconde extrémité positionnée pour être adjacente audit rotor (10); et

- un réflecteur de lumière circulaire (82) monté sur ledit rotor (10) de façon que, lorsque ledit rotor (10) tourne, ledit réflecteur (82) passe devant ladite seconde extrémité de ladite fibre (80), ainsi ladite vitesse de rotation et ladite position dudit rotor (10) par rapport audit stator (6) peut être calculée au moyen de ladite unité de microprocesseur (44).

**26.** Moteur-roue selon la revendication 4, dans lequel ladite paroi interne (18) dudit boîtier a une surface externe de forme concave pour produire, lorsque ledit rotor (10) tourne, une circulation d'air vers la périphérie de ladite paroi interne (18), ladite surface externe étant munie d'une série de lames parallèles et allongées (90) se prolongeant dans la direction dudit arbre (2), lesdites lames parallèles et allongées (90) ayant leur surface libre définissant un espace (92) dans lequel une partie d'un moyen de freinage (94) peut être monté, ainsi un échange de chaleur efficace peut être obtenu à travers ladite paroi interne (18), et ledit moyen de freinage (94) peut être refroidi par la circulation d'air produite le long de la paroi interne (18).

**27.** Moteur-roue selon la revendication 23, comprenant en outre un moyen pour assécher incluant un tuyau d'air (120) ayant une extrémité disposée à l'intérieur dudit boîtier, une chambre (121 ou 122) disposée à l'autre extrémité dudit tuyau (120), et un matériau dessiccatif disposé à l'intérieur de ladite chambre (121 ou 122), ainsi, lorsque ledit rotor (10) tourne, une circulation d'air est produite à l'intérieur dudit tuyau (120) et à travers ladite chambre (121 ou 122) pour assécher l'intérieur dudit boîtier.

**28.** Moteur-roue selon la revendication 27, dans lequel:

- ladite chambre (122) est une chambre annulaire allongée (122) disposée à l'intérieur dudit arbre creux (2), ladite chambre (122) étant ouverte à ses deux extrémités;

- ladite première ouverture dudit arbre (2) est étanche; et

- ladite autre extrémité dudit tuyau (120) est disposée entre ladite première ouverture qui est étanche et ladite chambre (122) de façon à ce que l'air qui sort de ladite autre extrémité du tuyau (120) circule dans ladite chambre (122).

**29.** Moteur-roue selon la revendication 27, dans lequel:

- ladite chambre (121) est disposée à l'extérieur dudit moteur-roue, et

- ladite première ouverture dudit arbre (2) est étanche;

ainsi ledit tuyau (120) est utilisé comme une sortie et comme une entrée de ladite chambre (121).

30. Moteur-roue selon la revendication 1, dans lequel ledit arbre (2) est muni de moyen de branchement à sa première extrémité, par lequel ledit moteur-roue peut être branché à un membre de support (50).

31. Moteur-roue selon la revendication 30, dans lequel ledit moyen de branchement est fait d'un membre annulaire (52) ayant sa bordure externe munie de façon régulière d'encoches (54) alternant avec des parties en saillie (56) de façon à ce que ledit membre annulaire (52) puisse être engagé et verrouillé avec une partie complémentaire (53) du membre de support correspondant (50).

32. Moteur-roue selon la revendication 31, en combinaison avec ledit membre de support (50) qui est une bielle articulée (50), dans lequel:

- lesdites parties en saillie (56) de ladite bordure externe ont une largeur qui varie dans la direction circonférentielle;
- ladite partie complémentaire (53) de ladite bielle articulée (50) a une section annulaire (58) ayant un diamètre suffisant pour que ladite section annulaire (58) puisse glisser sur ladite bordure externe;
- ladite section annulaire (58) a des encoches (60) et des parties en saillie (62) adaptées pour coopérer avec les parties en saillie (56) et les encoches correspondantes (54) de ladite bordure externe, lesdites parties en saillie (62) de ladite section annulaire (58) ayant une largeur qui varie dans la direction circonférentielle pour que ladite section annulaire (58) puisse glisser sur ladite bordure externe et tourner par rapport à ladite bordure externe pour être coincée dans une position assemblée;

ledit moteur-roue en combinaison avec ledit membre de support (50) comprenant en outre une clef (66) ayant des langues (68) qui peuvent être insérées dans des cavités (55) qui sont produites lorsque ladite section annulaire (58) est tournée par rapport à ladite bordure externe pour verrouiller ladite bordure externe par rapport audit section annulaire (58).

33. Moteur-roue en combinaison avec ledit membre de support 50), selon la revendication 32, où ladite bielle articulée (50) est munie d'une fente interne allongée (70) ayant une première extrémité adjacente à ladite section annulaire (58), et une seconde extrémité éloignée de ladite section annulaire (58), des conducteurs (4) pouvant ainsi être amenés audit arbre (2) le long de ladite fente allongée (70); et dans lequel ladite une clef (66) a une section allongée (72) munie d'une cavité allongée interne, ladite section allongée (72) étant apte à coopérer avec ladite fente interne (70) de ladite bielle (50) le long d'une partie de sa longueur pour protéger lesdits conducteurs (4).

34. Moteur-roue combiné avec un membre de support (50), selon la revendication 33, dans lequel ladite première extrémité de l'arbre (2) a une partie interne munie d'une cavité (74) ayant des bords à angle (76) de façon à ce que ladite cavité (74) puisse recevoir une clé servant à tourner ledit arbre (2).

35. Moteur-roue selon la revendication 15, dans lequel ledit entrefer est positionné à une distance prédéterminée $R_1$ de l'axe central (3) dudit arbre (2), ladite jante (28) a une surface (29) pour recevoir un pneu (32), qui est positionnée à une distance prédéterminée $R_2$ de l'axe central (3) dudit arbre (2), et $R_1/R_2$ est substantiellement de l'ordre de 0.65 à 0.91.

36. Moteur-roue selon la revendication 35, dans lequel ledit rotor (10) est muni d'un bobinage (9), et dans lequel $R_1/R_2$ est substantiellement de l'ordre de 0.65 à 0.80.

37. Moteur-roue selon la revendication 3, 4, 5, 6, 7, 8, 9, 10, 11, 12, 13, 14, 15, 16, 17, 18, 19, 20, 21, 22, 23, 26, 27, 28, 29, 30, 31, 32, 33, 34, 35, 36, dans lequel ledit stator (6) comprend une partie centrale fixée audit arbre (2), un support (13) s'étendant de façon radiale à partir de ladite partie centrale, et une pièce polaire périphérique, circulaire et faite de lames de métal (27) sur laquelle sont enroulés lesdits bobinages (8), ladite pièce polaire étant fixée à des extrémités périphériques dudit support (13), ledit support (13) étant muni d'ouvertures pour réduire son poids.

38. Moteur-roue selon la revendication 7, 8, 9, 10, 11, 12, 13, 14, 15, 16, 17, 18, 19, 20, 21, 22, 24, 25, 27, 28, 29, 30, 31, 32, 33, 34, 35 ou 36 dans lequel ledit rotor (10) comprend un boîtier ayant une paroi cylindrique (17) ayant une surface interne munie d'un moyen magnétique entourant ledit stator (6) et séparé dudit stator (6) par un entrefer.

39. Moteur-roue selon la revendication 24, dans lequel ledit support (13) comprend au moins deux bras (13) entre lesdites ouvertures.

40. Moteur-roue selon la revendication 13, 14, 15, 16, 23, 24, 25, 26, 27, 28, 29, 30, 31, 32, 33, 34 ou 35, dans lequel ledit rotor (10) comprend un moyen magnétique muni d'une série d'aimants permanents (26).

41. Moteur-roue selon la revendication 13, 14, 15, 16, 23, 24, 25, 26, 27, 28, 29, 30, 31, 32, 33, 34 ou 36, dans lequel ledit rotor (10) comprend un moyen magnétique ayant une pièce polaire fait de lames de métal sur laquelle un bobinage (9) est enroulé, ledit stator (6) est muni de balais (111) qui sont reliés à une sortie dudit moyen de conversion (12), et ledit rotor (10) est muni de surfaces de contact conductrices disposées de manière à coopérer avec lesdits balais (111), lesdites surfaces de contact étant reliées au bobinage (9) dudit rotor (10).

42. Moteur-roue selon la revendication 13, 14, 15, 16, 23, 24, 25, 26, 27, 28, 29, 30, 31, 32, 33, 34 ou 36, dans lequel ledit rotor (10) comprend un moyen magnétique ayant une pièce polaire faite de lames de métal sur laquelle est enroulé un bobinage (9), ainsi un courant électrique peut être induit dans ledit bobinage (9) dudit rotor (10) au moyen d'un champ électromagnétique produit par un courant électrique injecté dans lesdits bobinages (8) dudit stator (6).

43. Moteur-roue selon la revendication 15, 16, 17, 18, 19, 20, 21, 22, 23, 24, 25, 26, 27, 28, 29, 30, 31, 32, 33, 34, 35 ou 36, dans lequel ledit stator (6) comprend un matériau léger pouvant conduire la chaleur.

44. Moteur-roue selon la revendication 26, dans lequel ladite paroi externe (20) dudit boîtier comprend des sections convexes et concaves (112, 114) qui sont disposées en alternance le long d'une direction circonférentielle de ladite paroi externe (20), de telle manière que lorsque ledit rotor (10) tourne, une circulation d'air est produite à l'intérieur dudit boîtier par lesdites sections convexes (112) et une circulation d'air est produite le long des parties externes desdites sections concaves (114) de façon à permettre un échange de chaleur efficace à travers ladite paroi externe (20).

45. Moteur-roue selon la revendication 26, 27, 28, 29, 30, 31, 32, 33, 34, 35 ou 36, comprenant en outre un moyen de mesure pour mesurer une vitesse de rotation et une position dudit rotor (10) par rapport audit stator (6), ledit moyen de mesure comprenant:

    - une fibre optique (80) ayant une extrémité branchée à une unité de microprocesseur (44), et une seconde extrémité positionnée pour être adjacente audit rotor (10); et
    - un réflecteur de lumière circulaire (82) monté sur ledit rotor (10) de façon que, lorsque ledit rotor (10) tourne, ledit réflecteur (82) passe devant ladite seconde extrémité de ladite fibre (80), ainsi ladite vitesse de rotation et ladite position dudit rotor (10) par rapport audit stator (6) peut être calculée au moyen de ladite unité de microprocesseur (44).

46. Moteur-roue selon la revendication 6, 23, 26, 27, 28 ou 29, dans lequel ledit boîtier enferme de façon étanche ledit arbre (2), ledit stator (6) et ledit moyen de conversion (12).

47. Moteur-roue selon la revendication 23, 26, 27, 28 ou 29, comprenant un premier roulement à billes (22) relié à ladite paroi interne (18), et un second roulement à billes (24) relié à ladite paroi externe (20), lesdits roulements à billes (22, 24) étant montés respectivement de chaque côté dudit arbre (2) de façon à ce que le rotor (10) puisse tourner par rapport audit stator (6) au moyen des roulements à billes (22, 24).

48. Moteur-roue selon la revendication 23, 26, 27, 28 ou 29, comprenant en outre une jante (28) fixée autour d'une surface externe dudit boîtier, et une bande (30) faite d'un élastomère, ladite bande (30) étant montée entre ladite jante (28) et ledit boîtier, ladite jante (28) étant adaptée pour recevoir un pneu (32).

49. Moteur-roue selon la revendication 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 ou 36, dans lequel ledit stator (6) est cylindrique et est muni de fentes longitudinales et parallèles (200) servant à recevoir lesdits bobinages (8) dudit stator (6), lesdites fentes (200) étant courbées par rapport à un axe longitudinal (3) dudit arbre (2) de façon à ce que chacune desdites fentes (200) ait une extrémité basse qui est substantiellement alignée avec une extrémité haute de la fente adjacente de façon à fournir un couple régulier lorsque ledit moteur-roue est en opération.

50. Moteur-roue selon la revendication 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 ou 36, dans lequel ladite extrémité dudit arbre creux (2), qui est munie de ladite première ouverture comprend un moyen de branchement pour relier ledit arbre (2) à une extrémité d'une bielle articulée (50), ladite extrémité de ladite bielle articulée (50) étant munie d'un joint d'articulation à rotule (100); et dans lequel ladite paroi interne (18) dudit boîtier a un renflement annulaire vers l'intérieur et ledit arbre creux (2) a une longueur plus petite que la largeur de ladite paroi cylindrique (17) dudit boîtier de façon à ce que ledit joint d'articulaiion à rotule (100) soit positionné au moins en partie dans ledit espace circulaire et concentrique (92).

**51.** Moteur-roue selon la revendication 43, dans lequel ledit matériau est un alliage d'aluminium.

## Patentansprüche

**1.** Elektrische Motor/Rad-Einheit, umfassend eine Hohlwelle (2) mit einem mit einer ersten Öffnung versehenem Ende und einem zweiten mit einer zweiten Öffnung versehenem Ende, wobei die erste Öffnung Versorgungsleiter (4) von außerhalb der Motor/Rad-Einheit aufnehmen kann; einen mit der Welle (2) koaxialen und an der Weile (2) befestigten Stator (6), wobei der Stator (6) eine Hohlpartie (11) und Wicklungen (8) aufweist; einen mit dem Stator (6) koaxialen und drehbar um den Stator (6) montierten Rotor (10); und ein Umsetzmittel (12) zum Umsetzen einer elektrischen Eingangsspannung und eines elektrischen Eingangsstroms in eine elektrische Ausgangsspannung und einen elektrischen Ausgangsstrom, wobei der Ausgangsstrom ein variabler Wechselstrom ist, wobei das Umsetzmittel (12) eine Leistungselektronik (14) umfaßt mit Eingangsanschlüssen (15) zum Aufnehmen des elektrischen Eingangsstroms und mit Ausgangsanschlüssen (16) zur Erzeugung des variablen elektrischen Wechselstroms, wodurch im Betrieb der variable Wechselstrom die Wicklungen (8) des Stators (6) speist, wobei die Motor/Rad-Einheit dadurch gekennzeichnet ist, daß:

die Leistungselektronik (14) in der Hohlpartie (11) montiert ist; und
die Versorgungsleiter (4) direkt mit den Eingangsanschlüssen der in der Hohlpartie (11) angeordneten Leistungselektronik (14) derart verbunden sind, daß die in der ersten Öffnung der Hohlwelle aufgenommenen Leiter (4) von relativ geringem Durchmesser sein können, selbst in dem Fall, in dem der Motor ein relativ großes Drehmoment erzeugen soll.

**2.** Motor/Rad-Einheit nach Anspruch 1, bei der der Stator (6) eine an der Welle (2) befestigte Zentralpartie, eine sich radial von der Zentralpartie erstreckende Abstützung (13), und ein peripheres, kreisförmiges und aus Metallamellen (27) gefertigtes Polstück, auf dem die Wicklungen (8) aufgewickelt sind, umfaßt, wobei das Polstück an peripheren Enden der Abstützung (13) befestigt ist, wobei die Abstützung (13) mit Durchbrechungen zur Reduzierung ihres Gewichts versehen ist.

**3.** Motor/Rad-Einheit nach Anspruch 1, bei der der Rotor (10) ein Gehäuse mit einer zylindrischen Wand (17) mit einer mit einem magnetischen Mittel ausgerüsteten, den Stator (6) umgebenden und vom Stator (6) durch einen Luftspalt getrennte Innenfläche umfaßt.

**4.** Motor/Rad-Einheit nach Anspruch 3, bei der das Gehäuse eine auf einer Seite der zylindrischen Wand (17) angeordnete Innenwand (18) und eine auf der anderen Seite der zylindrischen Wand (17) angeordnete Außenwand (20) umfaßt, wobei die Welle (2) sich durch eine Zentralpartie der Innenwand (18) hindurch verlängert.

**5.** Motor/Rad-Einheit nach Anspruch 4, bei der das Gehäuse die Welle (2), den Stator (6) und das Umsetzmittel (12) dicht einschließt.

**6.** Motor/Rad-Einheit nach Anspruch 4, umfassend ein mit der Innenwand (18) verbundenes erstes Kugellager (22) und ein mit der Außenwand (20) verbundenes zweites Kugellager (24), wobei die Kugellager (22, 24) jeweils beiderseits der Welle (2) derart befestigt sind, daß der Rotor (10) relativ zum Stator (6) mittels der Kugellager (22, 24) drehbar ist.

**7.** Motor/Rad-Einheit nach Anspruch 2, bei der die Abstützung (13) wenigstens zwei Arme (13) zwischen den Durchbrechungen umfaßt.

**8.** Motor/Rad-Einheit nach Anspruch 7, bei der die Abstützung (13) wenigstens drei Arme (13) in gleichem Abstand zueinander umfaßt, die sich radial bis zu den peripheren Enden der Abstützung (13) erstrecken.

**9.** Motor/Rad-Einheit nach Anspruch 8, bei der die Arme (13) im gleichem Abstand zueinander vier Arme (13) im gleichem Abstand zueinander umfassen.

**10.** Motor/Rad-Einheit nach Anspruch 1, bei der der Rotor (10) mit einer Anzahl von Permanentmagneten (26) versehene magnetische Mittel umfaßt.

**11.** Motor/Rad-Einheit nach Anspruch 1, bei der der Rotor (10) ein magnetisches Mittel mit einem aus Metallamellen gefertigten Polstück umfaßt, auf welchem Polstück eine Wicklung (9) aufgewickelt ist, der Stator (6) mit an einen Ausgang des Umsetzmittel (12) verbundenen Bürsten (111) versehen ist, und der Rotor (10) mit zum Zusammenwirken mit den Bürsten (111) angeordneten leitenden Kontaktflächen versehen ist, wobei die Kontaktflächen mit der Wicklung (9) des Rotors (10) verbunden sind.

**12.** Motor/Rad-Einheit nach Anspruch 1, bei der der Rotor (10) ein magnetisches Mittel mit einem aus Metallamellen gefertigten Polstück, auf dem eine Wicklung (9) aufgewickelt ist, umfaßt, so daß auf diese Weise ein elektrischer Strom in der Wicklung (9) des Rotors (10) mittels eines von den Wicklungen (8) des Stators (6) erzeugten elektromagnetischen Feldes induzierbar ist.

13. Motor/Rad-Einheit nach Anspruch 1, bei der der Stator (6) einen leichten, wärmeleitendeen Werkstoff umfaßt.

14. Motor/Rad-Einheit nach Anspruch 13, bei der der Werkstoff eine Aluminiumlegierung ist.

15. Motor/Rad-Einheit nach Anspruch 3, ferner umfassend eine um eine Außenfläche des Gehäuses befestigte Felge (28) und einen Elastomerstreifen (30), wobei der Streifen (30) zwischen der Felge (28) und dem Gehäuse montiert ist, wobei die Felge (28) zur Aufnahme einer Bereifung (32) ausgebildet ist.

16. Motor/Rad-Einheit nach Anspruch 15, bei der die Felge (28) flach ist.

17. Motor/Rad-Einheit nach Anspruch 10, bei der das Umsetzmittel (12) umfaßt:

- einen Gleichstrom/Wechselstrom-Wandler (41a, 41b, 41c) mit einem Eingang (40) zum Aufnehmen eines Gleichstroms von den Eingangsanschlüssen (15) und mit drei Ausgängen (42) zum Erzeugen von dreiphasigen Wechselströmen an den Ausgangsanschlüssen (16); und
- eine mit dem Wandler (41a, 41b, 41c) zur Steuerung von dessen Betrieb verbundene Mikroprozessoreinheit (44).

18. Motor/Rad-Einheit nach Anspruch 12, bei der das Umsetzmittel (12) umfaßt:

- einen Gleichstrom/Wechselstrom-Wandler (41a, 41b, 41c) mit einem Eingang (40) zum Aufnehmen eines Gleichstroms ausgehend von den Eingangsanschlüssen (15) und mit drei Ausgängen (42) zum Erzeugen von dreiphasigen Wechselströmen an den Ausgangsanschlüssen (16); und
- eine mit dem Wandler (41a, 41b, 41c) zur Steuerung von dessen Betrieb verbundene Mikroprozessoreinheit (44).

19. Motor/Rad-Einheit nach Anspruch 17, bei der:

- der Stator (6) die Gestalt eines Kreuzes mit vier Armen (13) aufweist;
- der Wandler (41a, 41b, 41c) aus drei Wandlereinheiten (41a, 41b, 41c) besteht, die jeweils die dreiphasige Wechselströme erzeugen, wobei die Einheiten (41a, 41b, 41c) jeweils auf drei der vier Arme (13) befestigt sind; und

- die Mikroprozessoreinhelt (44) auf dem vierten der Arme (13) befestigt ist;

wobei die Motor/Rad-Einheit ferner zwei mit den Wandlereinheiten (41a, 41b, 41c) und dem Mikroprozessor (44) verbundene Verteilungs- und Versorgungskreisbusse (48) umfaßt, so daß auf diese Weise im Betrieb der Gleichstrom mittels dieser Busse (48) an die Wandlereinheiten (41a, 41b, 41c) und an den Mikroprozessor (44) verteilt wird.

20. Motor/Rad-Einheit nach Anspruch 18, bei der:

- der Stator (6) die Gestalt eines Kreuzes mit vier Armen (13) aufweist;
- der Wandler (41a, 41b, 41c) aus drei Wandlereinheiten (41a, 41b, 41c) besteht, die jeweils die dreiphasige Wechselströme erzeugen, wobei die Einheiten (41a, 41b, 41c) jeweils auf drei der vier Arme (13) befestigt sind; und
- die Mikroprozessoreinheit (44) auf dem vierten der Arme (13) befestigt ist;

wobei die Motor/Rad-Einheit ferner zwei mit den Wandlereinheiten (41a, 41b, 41c) und dem Mikroprozessor (44) verbundene Verteilungs- und Versorgungskreisbusse (48) umfaßt, so daß auf diese Weise im Betrieb der Gleichstrom mittels dieser Busse (48) an die Wandlereinheiten (41a, 41b. 41c) und an den Mikroprozessor (44) verteilt wird.

21. Motor/Rad-Einheit nach Anspruch 11, bei der das Umsetzmittel (12) umfaßt:

- einen Gleichstrom/Wechselstrom-Wandler (41a, 41b, 41c, 41d) mit einem Eingang (40) zum Aufnehmen eines Gleichstroms von den Eingangsanschlüssen (15) und mit vier Ausgängen (43, 45) zum Erzeugen von jeweils einem der Wicklung (9) des Rotor (10) bestimmten Gleichstrom und von den Wicklungen (8) des Stators (6) bestimmten dreiphasigen Wechselströmen; und
- eine mit dem Wandler (41a, 41b, 41c, 41d) zur Steuerung von dessen Betrieb verbundene Mikroprozessoreinheit (44).

22. Motor/Rad-Einheit nach Anspruch 21, bei der der Wandler (41a, 41b, 41c, 41d) eine erste Wandlereinheit (41d), die die Gleichspannung erzeugt, die zum Speisen der Wicklung (9) des Rotors (10) dient, und drei Wandlereinheiten (41a, 41b, 41c), die jeweils die dreiphasigen Wechselströme erzeugen, umfaßt.

23. Motor/Rad-Einheit nach Anspruch 4, bei der die Außenwand (20) des Gehäuses alternierend entlang einer Umfangsrichtung der Außenwand (20) angeordnete konvexe und konkave Abschnitte (112, 114) derart umfaßt, daß bei Drehung des Rotors (10) von den konvexen Abschnitten (112) eine Luftzirkulation im Inneren des Gehäuses hervorgerufen wird und eine Luftzirkulation entlang der äußeren Partien der konkaven Abschnitte (114) hervorgerufen wird, derart, daß ein effizienter Wärmetausch durch die Außenwand (20) hindurch ermöglicht wird.

24. Motor/Rad-Einheit nach Anspruch 2, bei der die peripheren Enden der Abstützung (13) auf dem Polstück des Stators (6) mittels eines runden Glieds (34), das mit den peripheren Enden verbunden ist, befestigt sind, das runde Glied (34) eine mit Einsenkungen (36) versehene äußere Oberfläche aufweist, das Polstück des Stators (6) eine mit vorstehenden Zungen (37) versehene innere Oberfläche zum Zusammenwirken mit den Einsenkungen (36) zum Fixieren des Polstücks des Stators (6) auf dem runden Glied (34) aufweist, wobei das runde Glied (34) eine innere Oberfläche mit vorstehenden Partien (38) aufweist, so daß auf diese Weise ein effizienter Wärmetausch mittels der vorstehenden Partien (38) erzielt werden kann, wenn eine Luftzirkulation im Inneren des Gehäuses erzeugt wird.

25. Motor/Rad-Einheit nach Anspruch 1, ferner umfassend ein Meßmittel zum Messen einer Drehzahl und einer Position des Rotors (10) gegenüber dem Stator (6), wobei das Meßmittel umfaßt:

   - eine optische Faser (80) mit einem mit einer Mikroprozessoreinheit (44) verbundenen Ende und einem, um benachbart zum Rotor (10) zu sein, positionierten zweiten Ende; und
   - einen auf dem Rotor (10) derart montierten runden Lichtreflektor (82), daß bei Drehung des Rotors (10) der Reflektor (82) an dem zweiten Ende der Faser (80) vorbeiläuft, so daß auf diese Weise die Drehzahl und die Position des Rotors (10) im Verhältnis zum Stator (6) mittels der Mikroprozessoreinheit (44) berechnet werden können.

26. Motor/Rad-Einheit nach Anspruch 4, bei der die Innenwand (18) des Gehäuses eine konkav gestaltete äußere Oberfläche aufweist, um bei Drehung des Rotors (10) eine Luftzirkulation in Richtung auf die Peripherie der Innenwand (18) zu erzeugen, wobei die äußere Oberfläche mit einer Reihe von parallelen und langgestreckten Lamellen (90) versehen ist, die sich in Richtung der Welle (2) verlängern, wobei die parallelen und langgestreckten Lamellen (90) mit ihrer freien Oberfläche einen Raum (92) begrenzen, in welchem ein Teil eines Bremsmittels (94) montierbar ist, so daß auf diese Weise ein effizienter Wärmetausch durch die Innenwand (18) hindurch erzielbar ist und das Bremsmittel (94) durch die längs der Innenwand (18) erzeugte Luftzirkulation gekühlt werden kann.

27. Motor/Rad-Einheit nach Anspruch 23, ferner umfassend ein Mittel zum Trockenhalten, umfassend ein Luftrohr (120) mit einem im Inneren des Gehäuses angeordneten Ende, eine am anderen Ende des Rohres (120) angeordnete Kammer (121 oder 122), und ein im Inneren der Kammer (121 oder 122) angeordnetes Trocknungsmaterial, so daß auf diese Weise bei drehendem Rotor (10) im Inneren des Rohrs (120) und durch die Kammer (121 oder 122) hindurch eine Luftzirkulation erzeugt wird zum Trockenhalten des Inneren des Gehäuses.

28. Motor/Rad-Einheit nach Anspruch 27, bei der:

   - die Kammer (122) eine im inneren der Hohlwelle (2) angeordnete langgestreckte Ringkammer (122) ist, wobei die Kammer (122) an ihren beiden Enden offen ist;
   - die erste Öffnung der Welle (2) dicht ist; und
   - das andere Ende des Rohrs (120) zwischen der ersten dichten Öffnung und der Kammer (122) derart angeordnet ist, daß die aus dem anderen Ende des Rohrs (120) austretende Luft in der Kammer (122) zirkuliert.

29. Motor/Rad-Einheit nach Anspruch 27, bei der:

   - die Kammer (121) außerhalb der Motor/Rad-Einheit angeordnet ist;
   - die erste Öffnung der Welle (2) dicht ist;

   so daß auf diese Weise das Rohr (120) wie ein Auslaß und wie ein Einlaß der Kammer (121) verwendet wird.

30. Motor/Rad-Einheit nach Anspruch 1, bei der die Welle (2) an ihrem ersten Ende mit einem Anschlußmittel versehen ist, durch das die Motor/Rad-Einheit an ein Abstützglied (50) anschließbar ist.

31. Motor/Rad-Einheit nach Anspruch 30, bei der das Anschlußmittel aus einem ringförmigen Teil (52) hergestellt ist, dessen Außenrand regelmäßig abwechselnd mit Aussparungen (54) und mit vorstehenden Partien (56) derart versehen ist, daß das ringförmige Teil (52) mit einer Komplementärpartie (53) des entsprechenden Abstützglieds (50) in Eingriff bringbar und verriegelbar ist.

32. Motor/Rad-Einheit nach Anspruch 31, in Kombination mit dem Abstützglied (50), welches ein angelenktes Pleuel (50) ist, bei der:

   - die vorstehenden Partien (56) des Außenrands eine sich in Umfangsrichtung verändernde Breite aufweisen;

- die Komplementärpartie (53) des angelenkten Pleuels (50) einen Ringabschnitt (58) mit ausreichendem Durchmesser aufweist, damit der Ringabschnitt (58) auf dem Außenrand gleiten kann;

- der Ringabschnitt (58) Aussparungen (60) und vorstehende Partien (62) aufweist, die dazu ausgebildet sind, um mit den vorstehenden Partien (56) und den entsprechenden Aussparungen (54) des Außenrands zusammenzuwirken, wobei die vorstehenden Partien (62) des Ringabschnitts (58) eine Breite aufweisen, die sich in Umfangsrichtung verändert, damit der Ringabschnitt (58) auf dem Außenrand gleiten und relativ zu dem Außenrand drehen kann, um in einer Zusammenbauposition festklemmbar zu sein;

wobei die Motor/Rad-Einheit in Kombination mit dem Abstützglied (50) ferner einen Schlüssel (66) mit Zungen (68), die in Hohlräume (55) einführbar sind, welche Hohlräume entstehen, wenn der Ringabschnitt (58) gegenüber dem Außenrand zum Verriegeln des Außenrands gegenüber dem Ringabschnitt (58) verdreht wird, umfaßt.

33. Motor/Rad-Einheit, kombiniert mit dem Abstützglied (50), nach Anspruch 32, wo das angelenkte Pleuel (50) mit einem inneren langgestreckten Spalt (70) versehen ist, mit einem ersten zu dem Ringabschnitt (58) benachbarten Ende, und einem zweiten von dem Ringabschnitt (58) entfernten Ende, so daß Leiter (4) auf diese Weise zu der Welle (2) entlang des langgestreckten Spaltes (70) heranführbar sind; und bei der ein Schlüssel (66) einen langgestreckten Abschnitt (72) mit einem langgestreckten inneren Hohlraum aufweist, wobei der langgestreckte Abschnitt (72) in der Lage ist, mit dem inneren Schlitz (70) des Pleuels (50) entlang eines Teils seiner Erreckung zum Schutz der Leiter (4) zusammenzuwirken.

34. Motor/Rad-Einheit mit einem Abstützglied (50) nach Anspruch 33, bei der das erste Ende der Welle (2) eine Innenpartie mit einem Hohlraum (74) mit derart winkligen Rändern (76) aufweist, daß der Hohlraum (74) einen Schlüssel zum Drehen der Welle (2) aufnehmen kann.

35. Motor/Rad-Einheit nach Anspruch 15, bei der der Luftspalt in einem vorbestimmten Abstand $R_1$ von der Hauptachse (3) der Welle (2) positioniert ist, die Felge (28) eine Oberfläche (29) zur Aufnahme einer Bereifung (32) aufweist, die in einem vorbestimmten Abstand $R_2$ von der Hauptachse (3) der Welle (2) positioniert ist, und $R_1/R_2$ im wesentlichen in der Größenordnung 0.65 bis 0.91 liegt.

36. Motor/Rad-Einheit nach Anspruch 35, bei der der Rotor (10) mit einer Wicklung (9) versehen ist, und $R_1/R_2$ im wesentlichen in der Größenordnung 0.65 bis 0.80 liegt.

37. Motor/Rad-Einheit nach Anspruch 3, 4, 5, 6, 7, 8, 9, 10, 11, 12, 13, 14, 15, 16, 17, 18, 19, 20, 21, 22, 23, 26, 27, 28, 29, 30, 31, 32, 33, 34, 35 oder 36, bei der der Stator (6) eine an der Welle (2) befestigte Zentralpartie, eine sich radial von der Zentralpartie erstreckende Abstützung (13), und ein peripheres, kreisförmiges und aus Metallamellen (27) gefertigtes Polstück, auf dem die Wicklungen (8) aufgewickelt sind, umfaßt, wobei das Polstück an peripheren Enden der Abstützung (13) befestigt ist, wobei die Abstützung (13) mit Durchbrechungen zur Reduzierung ihres Gewichts versehen ist.

38. Motor/Rad-Einheit nach Anspruch 7, 8, 9, 10, 11, 12, 13, 14, 15, 16, 17, 18, 19, 20, 21, 22, 24, 25, 27, 28, 29, 30, 31, 32, 33, 34, 35 oder 36, bei der der Rotor (10) ein Gehäuse mit einer zylindrischen Wand (17) mit einer mit einem magnetischen Mittel ausgerüsteten, den Stator (6) umgebenden und vom Stator (6) durch einen Luftspalt getrennte Innenfläche umfaßt.

39. Motor/Rad-Einheit nach Anspruch 24, bei der die Abstützung (13) wenigstens zwei Arme (13) zwischen den Durchbrechungen umfaßt.

40. Motor/Rad-Einheit nach Anspruch 13, 14, 15, 16, 23, 24, 25, 26, 27, 28, 29, 30, 31, 32, 33, 34 oder 35, bei der der Rotor (10) mit einer Anzahl von Permanentmagneten (26) versehene magnetische Mittel umfaßt.

41. Motor/Rad-Einheit nach Anspruch 13, 14, 15, 16, 23, 24, 25, 26, 27, 28, 29, 30, 31, 32, 33, 34 oder 36, bei der der Rotor (10) ein magnetisches Mittel mit einem aus Metallamellen gefertigten Polstück umfaßt, auf welchem Polstück eine Wicklung (9) aufgewickelt ist, der Stator (6) mit an einen Ausgang des Umsetzmittels (12) verbundenen Bürsten (111) versehen ist, und der Rotor (10) mit zum Zusammenwirken mit den Bürsten (111) angeordneten leitenden Kontaktflächen versehen ist, wobei die Kontaktflächen mit der Wicklung (9) des Rotors (10) verbunden sind.

42. Motor/Rad-Einheit nach Anspruch 13, 14, 15, 16, 23, 24, 25, 26, 27, 28, 29, 30, 31, 32, 33, 34 oder 36, bei der der Rotor (10) ein magnetisches Mittel mit einem aus Metallamellen gefertigten Polstück, auf dem eine Wicklung (9) aufgewickelt ist, umfaßt, so das auf diese Weise ein elektrischer Strom in der Wicklung (9) des Rotors (10) mittels eines von den Wicklungen (8) des Stators (6) erzeugten elektromagnetischen Feldes induzierbar ist.

43. Motor/Rad-Einheit nach Anspruch 15, 16, 17, 18, 19, 20, 21, 22, 23, 24, 25, 26, 27, 28, 29, 30, 31, 32, 33, 34, 35 oder 36, bei der der Stator (6) einen leichten, wärmeleitenden Werkstoff umfaßt.

44. Motor/Rad-Einheit nach Anspruch 26, bei der die Außenwand (20) des Gehäuses alternierend entlang einer Umfangsrichtung der Außenwand (20) angeordnete konvexe und konkave Abschnitte (112, 114) derart umfaßt, daß bei Drehung des Rotors (10) von den konvexen Abschnitten (112) eine Luftzirkulation im Inneren des Gehäuses hervorgerufen wird und eine Luftzirkulation entlang der äußeren Partien der konkaven Abschnitte (114) hervorgerufen wird, derart, daß ein effizienter Wärmetausch durch die Außenwand (20) hindurch ermöglicht wird.

45. Motor/Rad-Einheit nach Anspruch 26, 27, 28, 29, 30, 31, 32, 33, 34, 35 oder 36, ferner umfassend ein Meßmittel zum Messen einer Drehzahl und einer Position des Rotors (10) gegenüber dem Stator (6), wobei das Meßmittel umfaßt:

    - eine optische Faser (80) mit einem mit einer Mikroprozessoreinheit (44) verbundenen Ende und einem, um benachbart zum Rotor (10) zu sein, positionierten zweiten Ende; und
    - einen auf dem Rotor (10) derart montierten runden Lichtreflektor (82), daß bei Drehung des Rotors (10) der Reflektor (82) an dem zweiten Ende der Faser (80) vorbeiläuft, so daß auf diese Weise die Drehzahl und die Position des Rotors (10) im Verhältnis zum Stator (6) mittels der Mikroprozessoreinheit (44) berechnet werden können.

46. Motor/Rad-Einheit nach Anspruch 6, 23, 26, 27, 28 oder 29, bei der das Gehäuse die Welle (2), den Stator (6) und das Umsetzmittel (12) dicht einschließt.

47. Motor/Rad-Einheit nach Anspruch 23, 26, 27, 28 oder 29, umfassend ein mit der Innenwand (18) verbundenes erstes Kugellager (22) und ein mit der Außenwand (20) verbundenes zweites Kugellager (24), wobei die Kugellager (22, 24) jeweils beiderseits der Weile (2) derart befestigt sind, daß der Rotor (10) relativ zum Stator (6) mittels der Kugellager (22, 24) drehbar ist.

48. Motor/Rad-Einheit nach Anspruch 23, 26, 27, 28 oder 29, ferner umfassend eine um eine Außenfläche des Gehäuses befestigte Felge (28) und einen Elastomerstreifen (30), wobei der Streifen (30) zwischen der Felge (28) und dem Gehäuse montiert ist, wobei die Felge (28) zur Aufnahme einer Bereifung (32) ausgebildet ist.

49. Motor/Rad-Einheit nach Anspruch 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 oder 36, bei der der Stator (6) zylindrisch ist und mit langgestreckten und parallelen Schlitzen (200) versehen ist, die dazu dienen, die Wicklungen (8) des Stators (6) aufzunehmen, wobei die Schlitze (200) gegenüber einer Längsachse (3) der Welle (2) derart gekrümmt sind, daß jeder der Schlitze (200) ein unteres Ende hat, das annähernd mit einem oberen Ende des benachbarten Schlitzes ausgerichtet ist, um ein regelmäßiges Drehmoment abzugeben, wenn die Motor/Rad-Einheit in Betrieb ist.

50. Motor/Rad-Einheit nach Anspruch 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 oder 36, bei der dasjenige Ende der Hohlwelle (2), das mit der ersten Öffnung versehen ist, ein Anschlußmittel zum Verbinden der Welle (2) mit dem Ende eines anzulenkenden Pleuels (50) umfaßt, wobei das Ende des angelenkten Pleuels (50) mit einem Kugelgelenk (100) versehen ist; und bei der die Innenwand (18) des Gehäuses eine einwärts gerichtete ringförmige Ausbauchung aufweist und die Hohlwelle (2) eine geringere Länge als die Breite der zylindrischen Wandung (17) des Gehäuses aufweist, damit das Kugelgelenk (100) wenigstens teilweise in diesem konzentrischen Ringraum (92) positionierbar ist.

51. Motor/Rad-Einheit nach Anspruch 43, bei der der Werkstoff eine Aluminiumlegierung ist.

**Claims**

1. An electrically motorized wheel assembly comprising a hollow shaft (2) having a first opening at one end thereof, and a second opening at a second end thereof, said first opening being able to receive supply conductors (4) from outside said motorized wheel assembly; a stator (6) coaxial with said shaft (2) and fixed to said shaft (2), said stator (6) being provided with a hollow portion (11) and with coils (8); a rotor (10) coaxial with said stator (6) and mounted so that it can turn about said stator (6); and a conversion means (12) for converting an electrical input voltage and current into an electrical output voltage and current, said output current being AC and variable, said conversion means (12) comprising power electronics (14) having input terminals (15) for receiving said electrical input current and output terminals (16) for generating said variable AC electrical current and via which, in operation, said variable AC current supplies said coils (8) of said stator (6), said motorized wheel assembly being characterized in that:

said power electronics (14) is mounted in said hollow portion (11); and
said supply conductors (4) are connected directly to said input terminals of said power electronics (14) which is located inside said hollow portion (11) so that said conductors (4) which are received in said first opening of the hollow shaft can have a relatively small diameter even in a case where said motor has to generate a relatively high torque.

2. The motorized wheel assembly as claimed in claim 1, wherein said stator (6) comprises a central portion attached to said shaft (2), a support (13) extending radially from said central portion, and a peripheral pole piece which is circular and made of metal strips (27) on which said coils (8) are wound, said pole piece being fixed to peripheral ends of said support (13), said support (13) being provided with openings in order to reduce its weight.

3. The motorized wheel assembly as claimed in claim 1, wherein said rotor (10) comprises a housing having a cylindrical wall (17) having an inner surface provided with a magnetic means surrounding said stator (6) and separated from said stator (6) by an air gap.

4. The motorized wheel assembly as claimed in claim 3, wherein said housing comprises an inner wall (18) on one side of said cylindrical wall (17) and an outer wall (20) on the other side of said cylindrical wall (17), said shaft (2) extending through a central portion of said inner wall (18).

5. The motorized wheel assembly as claimed in claim 4, wherein said housing sealingly encloses said shaft (2), said stator (6) and said conversion means (12).

6. The motorized wheel assembly as claimed in claim 4, comprising a first ball bearing (22) connected to said inner wall (18), and a second ball bearing (24) connected to said outer wall (20), said ball bearings (22, 24) being mounted respectively on each side of said shaft (2) so that said rotor (10) can turn with respect to said stator (6) by means of the ball bearings (22, 24).

7. The motorized wheel assembly as claimed in claim 2, wherein said support (13) comprises at least two arms (13) between said openings.

8. The motorized wheel assembly as claimed in claim 7, wherein said support (13) comprises at least three equally spaced arms (13) extending radially as far as the peripheral ends of said support (13).

9. The motorized wheel assembly as claimed in claim 8, wherein said equally spaced arms (13) comprise four equally spaced arms (13).

10. The motorized wheel assembly as claimed in claim 1, wherein said rotor (10) comprises a magnetic means provided with a series of permanent magnets (26).

11. The motorized wheel assembly as claimed in claim 1, wherein said rotor (10) comprises a magnetic means having a pole piece made of strips of metal round which a coil (9) is wound, said stator (6) is provided with brushes (111) which are connected to an output of said conversion means (12), and said rotor (10) is provided with conductive contact surfaces disposed in a manner to interact with said brushes (111), said contact surfaces being connected to the coil (9) of said rotor (10).

12. The motorized wheel assembly as claimed in claim 1, wherein said rotor (10) comprises a magnetic means with a pole piece made of strips of metal round which a coil (9) is wound, and so an electric current can be induced in said coil (9) of said rotor (10) by means of an electromagnetic field produced by an electrical current injected into said coils (8) of said stator (6).

13. The motorized wheel assembly as claimed in claim 1, wherein said stator (6) comprises a lightweight heat-conductive material.

14. The motorized wheel assembly as claimed in claim 13, wherein said material is an aluminum alloy.

15. The motorized wheel assembly as claimed in claim 3, further comprising a rim (28) fixed around an outer surface of said housing, and a layer (30) made of an elastomer, said layer (30) being mounted between said rim (28) and said housing, said rim (28) being designed to receive a tire (32).

16. The motorized wheel assembly as claimed in claim 15, wherein said rim (28) is flat.

17. The motorized wheel assembly as claimed in claim 10, wherein said conversion means (12) comprises:

- a DC/AC converter (41a, 41b, 41c) having an input (40) for receiving a direct current from said input terminals (15), and three outputs (42) for generating three AC phase currents in said output terminals (16); and

- a microprocessor unit (44) connected to said converter (41a, 41b, 41c) for controlling its operation.

18. The motorized wheel assembly as claimed in claim 12, wherein said conversion means (12) comprises:

- a DC/AC converter (41a, 41b, 41c) having an input (40) for receiving a direct current from said input terminals (15), and three outputs (42) for generating three AC phase currents in said output terminals (16); and
- a microprocessor unit (44) connected to said converter (41a, 41b, 41c) for controlling its operation.

19. The motorized wheel assembly as claimed in claim 17, wherein:

- said stator (6) is cross-shaped and has four arms (13);
- said converter (41a, 41b, 41c) is made of three conversion units (41a, 41b, 41c) which generate respectively said three AC phase currents, said units (41a, 41b, 41c) being fixed respectively onto three of said four arms (13); and
- said microprocessor unit (44) is fixed onto the fourth of said arms (13);

said motorized wheel assembly further comprising two circular supply and distribution buses (48) connected to said conversion units (41a, 41b, 41c) and to the microprocessor (44) and so, in operation, said direct current is distributed to said conversion units (41a, 41b, 41c) and to the microprocessor (44) by means of said buses (48).

20. The motorized wheel assembly as claimed in claim 18, wherein:

- said stator (6) is cross-shaped and has four arms (13);
- said converter (41a, 41b, 41c) is made of three conversion units (41a, 41b, 41c) which generate respectively said three AC phase currents, said units (41a, 41b, 41c) being fixed respectively onto three of said four arms (13); and
- said microprocessor unit (44) is fixed onto the fourth of said arms (13);

said motorized wheel assembly further comprising two circular supply and distribution buses (48) connected to said conversion units (41a, 41b, 41c) and to the microprocessor (44) and so, in operation, said direct current is distributed to said conversion units (41a, 41b, 41c) and to the microprocessor (44) by means of said buses (48).

21. The motorized wheel assembly as claimed in claim 11, wherein said conversion means (12) comprises:

- a DC/AC converter (41a, 41b, 41c, 41d) having an input (40) for receiving a direct current from said input terminals (15), and four outputs (43, 45) for generating respectively a direct current intended for the coil (9) of said rotor (10) and three AC phase currents intended for the coils (8) of said stator (6); and
- a microprocessor unit (44) connected to said converter (41a, 41b, 41c, 41d) for controlling its operation.

22. The motorized wheel assembly as claimed in claim 21, wherein said converter (41a, 41b, 41c, 41d) comprises a first conversion unit (41d) which generates said DC voltage used to supply said coil (9) of said rotor (10) and three conversion units (41a, 41b, 41c) which generate respectively said three AC phase currents.

23. The motorized wheel assembly as claimed in claim 4, wherein said outer wall (20) of said housing comprises convex and concave sections (112, 114) which alternate along a circumferential direction of said outer wall (20) such that when said rotor (10) turns, an air circulation is produced inside said housing by said convex sections (112), and an air circulation is produced along the outside portions of said concave sections (114) so as to allow efficient heat exchange through said outer wall (20).

24. The motorized wheel assembly as claimed in claim 2, wherein said peripheral ends of said support (13) are fixed on to said pole piece of said stator (6) by means of a circular member (34) which is solid with said peripheral ends, said circular member (34) has an outer surface provided with recesses (36), said pole piece of said stator (6) has an inner surface provided with projecting tongues (37) which can interact with said recesses (36) in order to fix said pole piece of said stator (6) onto said circular member (34), said circular member (34) having an inner surface provided with projecting portions (38), it thus being possible to obtain an efficient heat exchange by means of said projecting portions (38) when an air circulation is produced inside said housing.

25. The motorized wheel assembly as claimed in claim 1, further comprising a measuring means for measuring a rotational speed and a position of said rotor (10) with respect to said stator (6), said measuring means comprising:

- an optical fiber (80) having one end connected to a microprocessor unit (44), and a second end positioned so as to be adjacent to said rotor (10); and

- a circular light reflector (82) mounted onto said rotor (10) in such a manner that when said rotor (10) turns, said reflector (82) passes in front of said second end of said fiber (80), whereby said rotational speed and said position of said rotor (10) with respect to said stator (6) can be calculated by means of said microprocessor unit (44).

26. The motorized wheel assembly as claimed in claim 4, wherein said inner wall (18) of said housing has a concave-shaped outer surface to produce, when said rotor (10) is turning, an air circulation toward the periphery of said inner wall (18), said outer surface being provided with a series of parallel and elongated strips (90) extending in the direction of said shaft (2), said parallel and elongated strips (90) having their free surface defining a space (92) in which part of a braking means (94) can be mounted, whereby an efficient heat exchange can be obtained through said inner wall (18) and said braking means (94) can be cooled by the air circulation produced along said inner wall (18).

27. The motorized wheel assembly as claimed in claim 23, further comprising a drying means including an air pipe (120) having one end disposed inside said housing, a chamber (121 or 122) disposed at the other end of said pipe (120), and a desiccating material disposed inside said chamber (121 or 122) whereby, when said rotor (10) turns, an air circulation is produced inside said pipe (120) and through said chamber (121 or 122) in order to dry the inside of said housing.

28. The motorized wheel assembly as claimed in claim 27, wherein:

- said chamber (122) is an elongated annular chamber (122) disposed inside said hollow shaft (2), said chamber (122) being open at both ends;
- said first opening in said shaft (2) is airtight; and
- said other end of said pipe (120) is disposed between said first opening which is airtight and said chamber (122) so that the air which leaves said other end of the pipe (120) circulates in said chamber (122).

29. The motorized wheel assembly as claimed in claim 27, wherein:

- said chamber (121) is disposed outside said motorized wheel assembly, and
- said first opening in said shaft (2) is airtight; whereby said pipe (120) is used as an outlet and an inlet for said chamber (121).

30. The motorized wheel assembly as claimed in claim 1, wherein said shaft (2) is provided with a connecting means at its first end, via which said motorized wheel assembly can be connected to a supporting member (50).

31. The motorized wheel assembly as claimed in claim 30, wherein said connecting means is made of an annular member (52) having its outer edge provided with regular recesses (54) alternating with projecting portions (56) so that said annular member (52) can be engaged and locked with a complementary part (53) of the corresponding supporting member (50).

32. The motorized wheel assembly as claimed in claim 31, in combination with said supporting member (50) which is an articulated connecting rod (50), wherein:

- said projecting portions (56) of said outer edge have a width which varies in the circumferential direction;
- said complementary part (53) of said articulated connecting rod (50) has an annular section (58) having sufficient diameter so that said annular section (58) can be slid over said outer edge;
- said annular section (58) has recesses (60) and projecting portions (62) which are designed to interact with the corresponding projecting portions (56) and recesses (54) of said outer edge, said projecting portions (62) of said annular section (58) having a width which varies in the circumferential direction so that said annular section (58) can be slid over said outer edge and turned with respect to said outer edge in order to be wedged in an assembled position;

said motorized wheel assembly in combination with said supporting member (50) further comprising a key (66) having tongues (68) which can be inserted in cavities (55) which are produced when said annular section (58) is turned with respect to said outer edge in order to lock said outer edge with respect to said annular section (58).

33. The motorized wheel assembly in combination with said supporting member (50), as claimed in claim 32, wherein said articulated connecting rod (50) is provided with an inner elongated slot (70) having a first end adjacent to said annular section (58), and a second end distal from said annular section (58), it thus being possible for conductors (4) to be brought to said shaft (2) along said elongated slot (70); and wherein said key (66) has an elongated section (72) provided with an inner elongated cavity, said elongated section (72) being able to interact with said inner slot (70) of said connecting rod (50) along a part of its length in order to protect said conductors (4).

34. The motorized wheel assembly combined with a supporting member (50), as claimed in claim 33, wherein said first end of the shaft (2) has an inner portion provided with a cavity (74) having angled edges (76) so that said cavity (74) can receive a key for turning said shaft (2).

35. The motorized wheel assembly as claimed in claim 15, wherein said air gap is positioned at a predetermined distance $R_1$ from the central axis (3) of said shaft (2), said rim (28) has a surface (29) for receiving a tire (32), which surface is positioned at a predetermined distance $R_2$ from the central axis (3) of said shaft (2), and $R_1/R_2$ is substantially of the order of 0.65 to 0.91.

36. The motorized wheel assembly as claimed in claim 35, wherein said rotor (10) is provided with a coil (9), and wherein $R_1/R_2$ is substantially of the order of 0.65 to 0.80.

37. The motorized wheel assembly as claimed in claim 3, 4, 5, 6, 7, 8, 9, 10, 11, 12, 13, 14, 15, 16, 17, 18, 19, 20, 21, 22, 23, 26, 27, 28, 29, 30, 31, 32, 33, 34, 35 or 36, wherein said stator (6) comprises a central portion attached to said shaft (2), a support (13) extending radially from said central portion, and a peripheral circular pole piece made of metal strips (27) round which said coils (8) are wound, said pole piece being fixed onto peripheral ends of said support (13), said support (13) being provided with openings in order to reduce its weight.

38. The motorized wheel assembly as claimed in claim 7, 8, 9, 10, 11, 12, 13, 14, 15, 16, 17, 18, 19, 20, 21, 22, 24, 25, 27, 28, 29, 30, 31, 32, 33, 34, 35 or 36, wherein said rotor (10) comprises a housing having a cylindrical wall (17) having an inner surface provided with a magnetic means surrounding said stator (6) and separated from said stator (6) by an air gap.

39. The motorized wheel assembly as claimed in claim 24, wherein said support (13) comprises at least two arms (13) between said openings.

40. The motorized wheel assembly as claimed in claim 13, 14, 15, 16, 23, 24, 25, 26, 27, 28, 29, 30, 31, 32, 33, 34 or 35, wherein said rotor (10) comprises a magnetic means provided with a series of permanent magnets (26).

41. The motorized wheel assembly as claimed in claim 13, 14, 15, 16, 23, 24, 25, 26, 27, 28, 29, 30, 31, 32, 33, 34 or 36, wherein said rotor (10) comprises a magnetic means including a pole piece made of metal strips round which a coil (9) is wound, said stator (6) is provided with brushes (111) which are connected to one output of said conversion means (12), and said rotor (10) is provided with conductive contact surfaces disposed in a manner to cooperate with said brushes (111), said contact surfaces being connected to the coil (9) of said rotor (10).

42. The motorized wheel assembly as claimed in claim 13, 14, 15, 16, 23, 24, 25, 26, 27, 28, 29, 30, 31, 32, 33, 34 or 36, wherein said rotor (10) comprises a magnetic means including a pole piece made of metal strips round which a coil (9) is wound, whereby an electrical current can be induced in said coil (9) of said rotor (10) by means of an electromagnetic field produced by an electric current injected into said coils (8) of said stator (6).

43. The motorized wheel assembly as claimed in claim 15, 16, 17, 18, 19, 20, 21, 22, 23, 24, 25, 26, 27, 28, 29, 30, 31, 32, 33, 34, 35 or 36, wherein said stator (6) comprises a lightweight heat conductive material.

44. The motorized wheel assembly as claimed in claim 26, wherein said outer wall (20) of said housing comprises convex and concave sections (112, 114) which alternate along a circumferential direction of said outer wall (20), in such a manner that when said rotor (10) turns, an air circulation is produced inside said housing by said convex sections (112) and an air circulation is produced along the outside portions of said concave sections (114) so as to allow efficient heat exchange through said outer wall (20).

45. The motorized wheel assembly as claimed in claim 26, 27, 28, 29, 30, 31, 32, 33, 34, 35 or 36, further comprising a measuring means for measuring a rotational speed and a position of said rotor (10) with respect to said stator (6), said measuring means comprising:

- an optical fiber (80) having one end connected to a microprocessor unit (44), and a second end positioned so as to be adjacent to said rotor (10); and
- a circular light reflector (82) mounted on said rotor (10) in such a manner that, when said rotor (10) turns, said reflector (82) passes in front of said second end of said fiber (80), whereby said rotational speed and said position of said rotor (10) with respect to said stator (6) can be calculated by means of said microprocessor unit (44).

**46.** The motorized wheel assembly as claimed in claim 6, 23, 26, 27, 28 or 29, wherein said housing sealingly encloses said shaft (2), said stator (6) and said conversion means (12).

**47.** The motorized wheel assembly as claimed in claim 23, 26, 27, 28 or 29, comprising a first ball bearing (22) connected to said inner wall (18), and a second ball bearing (24) connected to said outer wall (20), said ball bearings (22, 24) being mounted respectively on each side of said shaft (2) so that the rotor (10) can turn with respect to said stator (6) by means of the ball bearings (22, 24).

**48.** The motorized wheel assembly as claimed in claim 23, 26, 27, 28 or 29, further comprising a rim (28) fixed around an outer surface of said housing, and a layer (30) made of an elastomer, said layer (30) being mounted between said rim (28) and said housing, said rim (28) being designed to receive a tire (32).

**49.** The motorized wheel assembly as claimed in claim 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 or 36, wherein said stator (6) is cylindrical and is provided with longitudinal parallel slots (200) for receiving said coils (8) of said stator (6), said slots (200) being curved with respect to a longitudinal axis (3) of said shaft (2) so that each of said slots (200) has a lower end which is substantially aligned with an upper end of the adjacent slot so as to provide an even torque when said motorized wheel assembly is operating.

**50.** The motorized wheel assembly according to claim 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 or 36, wherein said end of said hollow shaft (2), which is provided with said first opening comprises a connecting means for connecting said shaft (2) to one end of an articulated connecting rod (50), said end of said articulated connecting rod (50) being provided with a ball joint (100); and wherein said inner wall (18) of said housing has an annular inward swelling and said hollow shaft (2) has a length which is shorter than the width of said cylindrical wall (17) of said housing so that said ball joint (100) is positioned at least partly in said circular and concentric space (92).

**51.** The motorized wheel assembly as claimed in claim 43, wherein said material is an aluminum alloy.

FIG. 1

FIG. 2

FIG. 4

FIG. 3

FIG. 6

FIG. 5

FIG. 9

FIG. 8

FIG. 7

FIG. 10

FIG. 11

FIG. 13

FIG. 12

EP 0 650 644 B1

FIG. 14

FIG. 15

FIG. 16

FIG. 17

FIG. 18

FIG. 19

FIG. 20

FIG. 21

FIG. 22

FIG. 23

FIG. 24

FIG. 25